# EUROPEAN PATENT APPLICATION

(11) **EP 3 364 567 A1**
(43) Date of publication of application: **22.08.2018**
(21) Application number: 16868543.6
(22) Date of filing: 22.11.2016
(51) Int. Cl.: H04B 10/27, G02B 6/26

(54) **COMMUNICATION SYSTEM AND CONNECTOR**

(30) Priority: 26.11.2015 JP 2015230871
(71) Applicant: Nippon Telegraph and Telephone Corporation, Tokyo 100-8116 (JP)
(72) Inventor: ODA Takuya, Musashino-shi Tokyo 180-8585 (JP); INUI Tetsuro, Musashino-shi Tokyo 180-8585 (JP); HIRANO Akira, Musashino-shi Tokyo 180-8585 (JP); IMAJUKU Wataru, Musashino-shi Tokyo 180-8585 (JP); KOBAYASHI Shoukei, Musashino-shi Tokyo 180-8585 (JP); TANAKA Takafumi, Musashino-shi Tokyo 180-8585 (JP); MIYAMOTO Yutaka, Musashino-shi Tokyo 180-8585 (JP); TAKARA Hidehiko, Musashino-shi Tokyo 180-8585 (JP)
(74) Representative: Brevalex
(86) International application number: PCT/JP2016/084583
(87) International publication number: WO 2017/090600

(57) **Abstract**

A communication system includes three or more nodes and a multi-core fiber having a plurality of cores and being used in at least a partial segment of the connection between the nodes. One node of the nodes is connected to the multi-core fiber and includes a connector configured to add and drop a signal to and from an allocated core exclusively allocated for communication between the one node and another node of the nodes and/or configured to relay a signal transmitted through another core allocated to communication between the other nodes in multi-core fibers connected to the one node.

## Description

### TECHNICAL FIELD

The present invention relates to a communication system and a connector.

Priority is claimed on Japanese Patent Application No. 2015-230871, filed November 26, 2015, the content of which is incorporated herein by reference.

### BACKGROUND ART

A communication network which uses optical fibers is constructed in a core network that connects together metropolises and a metro network that connects together bases in an area. In such a network, a plurality of optical fibers are used in a bundle. Wavelength division multiplexing (WDM) transmission which involves multiplexing a plurality of optical signals having different wavelengths is performed on respective individual optical fibers to realize high-capacity signal transmission (for example, see Non-Patent Literature 1). In order to further increase the transmission capacity, the use of a multi-core fiber (MCF) which is an optical fiber having a plurality of cores instead of an optical fiber (single core fiber: SCF) having one core has been discussed (for example, see Non-Patent Literatures 2 and 3).

In a node of a ring network for wavelength division multiplexing transmission which uses SCF, it is necessary to divide multiplexed optical signals in respective wavelengths in order to add and drop (Add/Drop) desired signals from optical signals that are multiplex-transmitted through an optical fiber. When a network is configured using MCF instead of SCF in the future, the number of optical signals will increase as the number of transmission cores and the number of signals divided in respective wavelengths will also increase dramatically. Due to this, when a method similar to Add/Drop in the network which uses SCF is applied to a network which uses an MCF, there is a problem that a device for performing Add/Drop of optical signals in each node becomes complex. Moreover, there is another problem that installation and maintenance of nodes take time and labor.

### CITATION LIST

### [Non-Patent Literature]

[Non-Patent Literature 1] Shinji Matsuoka, "Ultrahigh-speed Ultrahigh-capacity Transport Network Technology for Cost-effective Core and Metro Networks," NTT Technical Journal, March 2011, pages 8-12
[Non-Patent Literature 2] Yutaka Miyamoto and Hirokazu Takenouchi, "Dense Space-division-multiplexing Optical Communications Technology for Petabit-per-second Class Transmission," NTT Technical Journal, August 2014, pages 52-56
[Non-Patent Literature 3] Kazuyuki Shiraki, "R&D Trends in Optical Fiber and Cable Technology," NTT Technical Journal, January 2015, pages 59-63

### SUMMARY OF INVENTION

### [Technical Problem]

In view of the above-described problems, an object of the present invention is to provide a communication system and a connector which facilitate adding and dropping of optical signals in nodes connected to a multi-core fiber.

### [Solution to Problem]

A communication system of a first aspect of the present invention is a communication system which includes three or more nodes; and a multi-core fiber having a plurality of cores, the multi-core fiber being used in at least a partial segment of the connection between the nodes, wherein one node of the nodes is connected to the multi-core fiber and includes a connector configured to add and drop a signal to and from an allocated core exclusively allocated from among the cores for communication between the one node and another node of the nodes and/or configured to relay a signal transmitted through another core allocated from among the cores for communication between the other nodes in multi-core fibers connected to the one node.

According to a second aspect of the present invention, in the communication system of the first aspect, the connector is further configured to switch an operation of the allocated core to operate to add or drop a signal or to relay a signal.

According to a third aspect of the present invention, in the communication system of the first aspect, each of the nodes is connected to two other nodes.

According to a fourth aspect of the present invention, in the communication system of the first aspect, each of two nodes of the nodes is connected to one of the other nodes, and each of the nodes other than the two nodes is connected to two nodes of the other nodes.

According to a fifth aspect of the present invention, in the communication system of the first aspect, at least one node of the nodes has communication paths directed to all of the other nodes, respectively, and each of the communication paths uses a respective allocated core.

According to a sixth aspect of the present invention, in the communication system of the first aspect, the nodes have communication paths directed to the other nodes, and each of the communication paths uses a respective allocated core.

According to a seventh aspect of the present invention, in the communication system of the sixth aspect, all the nodes have communication paths directed to all of the other nodes, respectively, and each of the communication paths uses a respective allocated core.

According to an eighth aspect of the present invention, in the communication system of the first aspect, the one node has one communication path directed to each communication target node of the other nodes, and the one communication path uses a respective allocated core.

According to a ninth aspect of the present invention, in the communication system of the first aspect, the one node has a communication path directed to each communication target node of the other nodes, and different cores of the cores are used for each communication path.

According to a tenth aspect of the present invention, in the communication system of the first aspect, the one node uses different communication paths for transmission and reception in communication with a communication target nodes of the other nodes, and the allocated core allocated to the communication path for transmission is different from the allocated core allocated to the communication path for reception.

According to an eleventh aspect of the present invention, in the communication system of the first aspect, the one node uses a communication path for transmission and reception in communication with a communication target node of the other nodes, and the core allocated to the communication path is used for transmission and reception.

According to a twelfth aspect of the present invention, in the communication system of the first aspect, the core allocated to the one node is selected from the cores on a basis of a communication quality required for the one node.

According to a thirteenth aspect of the present invention, in the communication system of the first aspect, the one node transmits a signal obtained by multiplexing signals of a plurality of wavelengths between the one node and a communication target node of the nodes via a communication path which uses the allocated core.

A connector of a fourteenth aspect of the present invention is a connector used in a node connected to a multi-core fiber having a plurality of cores, wherein the connector is configured to add and drop a signal to and from an allocated core exclusively allocated for communication of the node in which the connector is used.

According to a fifteenth aspect of the present invention, in the connector of the fourteenth aspect, the connector is further configured to relay a signal transmitted by another core allocated for communication between other nodes between multi-core fibers connected to the node.

According to a sixteenth aspect of the present invention, in the connector of the fifteenth aspect, the connector is further configured to switch an operation of the allocated core to operate to add or drop a signal or to relay a signal.

### [Advantageous Effects of Invention]

According to the present invention, it is possible to facilitate adding and dropping of optical signals in nodes connected to a multi-core fiber.

### BRIEF DESCRIPTION OF DRAWINGS

Fig. 1 is a diagram showing a configuration example of a communication system according to a first embodiment.
Fig. 2A is a diagram showing the first configuration example of a connector used in a communication system.
Fig. 2B is a diagram showing a first configuration example of a connector used in a communication system.
Fig. 3A is a diagram showing a second configuration example of a connector used in a communication system.
Fig. 3B is a diagram showing the second configuration example of a connector used in a communication system.
Fig. 4A is a diagram showing a third configuration example of a connector used in a communication system.
Fig. 4B is a diagram showing the third configuration example of a connector used in a communication system.
Fig. 5 is a diagram showing a configuration example of an Add/Drop node when WDM transmission is performed in a communication system.
Fig. 6 is a diagram showing a configuration example of the communication system according to a second embodiment.
Fig. 7 is a diagram showing a configuration example of the communication system according to a third embodiment.
Fig. 8 is a diagram showing a configuration example of an Add/Drop node when WDM transmission is performed in a communication system.
Fig. 9 is a diagram showing a configuration example of the communication system according to a fourth embodiment.
Fig. 10 is a diagram showing a configuration example of an Add/Drop node when WDM transmission is performed in a communication system.
Fig. 11 is a diagram showing another configuration example of an Add/Drop node when WDM transmission is performed in a communication system.
Fig. 12 is a diagram showing a configuration example in which multiple stages of combiners/splitters are used in the Add/Drop node.
Fig. 13 is a diagram showing a configuration of a communication system according to a fifth embodiment.
Fig. 14 is a diagram showing a configuration example of a communication system according to a sixth embodiment.
Fig. 15 is a diagram showing a configuration example of a communication system according to a seventh embodiment.
Fig. 16 is a diagram showing a configuration example of a communication system according to an eighth embodiment.
Fig. 17 is a diagram showing a configuration example of a communication system according to a ninth embodiment.
Fig. 18 is a diagram showing a first configuration example of the communication system shown in Fig. 1, in which a plurality of SCFs is used in a partial segment of the connection between Add/Drop nodes.
Fig. 19 is a diagram showing a second configuration example of the communication system shown in Fig. 1, in which a plurality of SCFs is used in the connection between Add/Drop nodes.
Fig. 20 is a diagram showing a first configuration example of a switching connector according to the present invention.
Fig. 21 is a diagram showing a second configuration example of a switching connector according to the present invention.
Fig. 22 is a diagram showing a third configuration example of a switching connector according to the present invention.
Fig. 23 is a diagram showing a configuration example of a path switching unit included in a switching connector.
Fig. 24 is a diagram showing a fourth configuration example of a switching connector according to the present invention.

### DESCRIPTION OF EMBODIMENTS

Hereinafter, a communication system and a connector according to an embodiment of the present invention will be described with reference to the drawings. In the following embodiments, elements denoted by the same reference numerals perform similar operations and a redundant description thereof will be omitted appropriately.

### [First Embodiment]

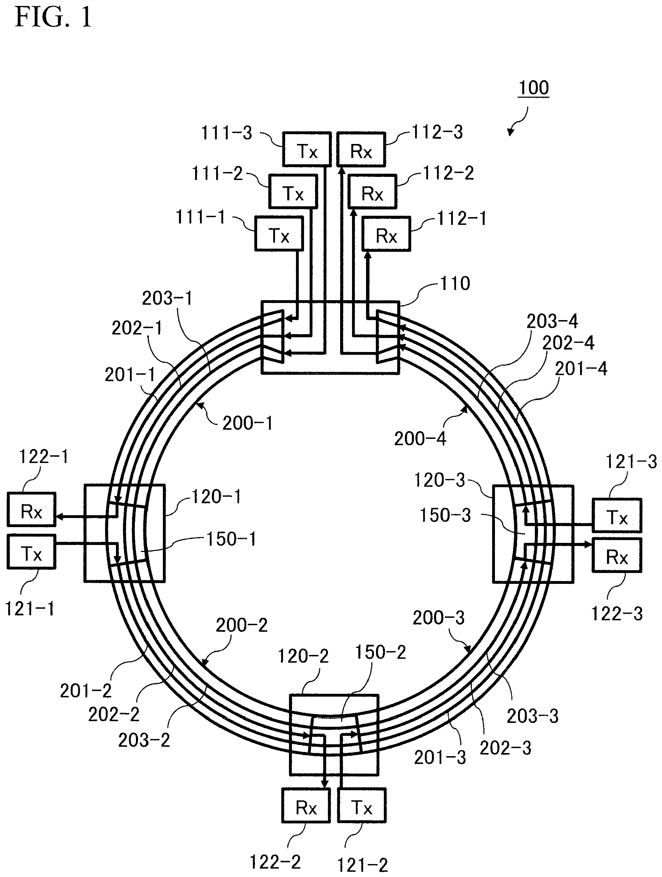

Fig. 1 is a diagram showing a configuration example of a communication system 100 according to a first embodiment. The communication system 100 includes a transceiving node 110 and n Add/Drop nodes 120, n being an integer of 1 or more. Fig. 1 shows a configuration example of the communication system 100 when n=3. In the following description, the respective n Add/Drop nodes 120 will be referred to as Add/Drop nodes 120-1 to 120-n. Moreover, the transceiving node 110 and the Add/Drop node 120 will be collectively referred to as a "node." In the following description, a transmitting device, a receiving device, a transceiving device, and the like that perform communication using optical signals and nodes will be described as individual configurations. However, a node may include a transmitting device, a receiving device, a transceiving device, and the like.

Nodes are connected together by multi-core fibers (MCFs) 200-1 to 200-4. The communication system 100 has a physical topology of a single-system one-way ring configuration in which the nodes are connected together by the MCFs 200-1 to 200-4. The transceiving node 110 and the Add/Drop node 120-1 are connected together by the MCF 200-1. The Add/Drop node 120-1 and the Add/Drop node 120-2 are connected together by the MCF 200-2. The Add/Drop node 120-2 and the Add/Drop node 120-3 are connected together by the MCF 200-3. The Add/Drop node 120-3 and the transceiving node 110 are connected together by the MCF 200-4. Each of the MCFs 200-1 to 200-4 of the first embodiment has three cores 201, 202, and 203.

To generalize the description of the configuration of the communication system 100, an Add/Drop node 120-i (1≤i≤n-1) is connected to an Add/Drop node 120-(i+1) by an MCF 200-(i+1). The MCF 200-1 connects together the transceiving node 110 and the Add/Drop node 120-1. The MCF 200-(n+1) connects together the Add/Drop node 120-n and the transceiving node 110.

Each node of the communication system 100 includes a transmitting device (Tx) and a receiving device (Rx) that perform communication between the nodes. Transmitting devices 111-1 to 111-3 and receiving devices 112-1 to 112-3 are provided in the transceiving node 110. A transmitting device 121-1 and a receiving device 122-1 are provided in the Add/Drop node 120-1. A transmitting device 121-2 and a receiving device 122-2 are provided in the Add/Drop node 120-2. A transmitting device 121-3 and a receiving device 122-3 are provided in the Add/Drop node 120-3. The transmitting devices 111-1 to 111-3 generate optical signals to be transmitted to the Add/Drop nodes 120-1 to 120-3, respectively. The receiving devices 112-1 to 112-3 receive optical signals transmitted from the Add/Drop nodes 120-1 to 120-3 and acquire information included in the optical signals. The transmitting devices 121-1 to 121-3 generate optical signals to be transmitted to the transceiving node 110. The receiving devices 122-1 to 122-3 receive optical signals transmitted from the transceiving node 110 and acquire information included in the optical signals.

The transmitting devices 111-1 to 111-3 generate optical signals addressed to the Add/Drop nodes 120-1 to 120-3, respectively. The three optical signals generated by the transmitting devices 111-1 to 111-3 are added to the cores 201-1 to 203-1 of the MCF 200-1, respectively. The receiving devices 112-1 to 112-3 receive optical signals transmitted from the Add/Drop nodes 120-1, 120-2, and 120-3 to nodes included in the receiving devices, respectively. The receiving devices 112-1 to 112-3 receive optical signals from the Add/Drop nodes 120-1 to 120-3 via the cores 201-4 to 203-4 of the MCF 200-4. A fan-in device or a fan-out device is used for adding optical signals to the MCF 200 and dropping optical signals from the MCF 200 in the transceiving node 110.

The fan-in device is a device which is connected to each of the cores in a multi-core fiber and which adds optical signals to the cores. The fan-out device is a device which is connected to each of the cores in a multi-core fiber and which drops each of optical signals propagating through the cores. Since the only difference between the devices is that the propagating directions of optical signals are different, input and output of optical signals to and from a multi-core fiber may be performed using any one of the fan-in device and the fan-out device. Moreover, adding of optical signals addressed to a multi-core fiber and dropping of optical signals from the multi-core fiber may be performed simultaneously using one device.

Connectors 150-1 to 150-3 are provided in the Add/Drop nodes 120-1 to 120-3, respectively. A connector 150-i of an Add/Drop node 120-i (i=1, 2, 3) is connected to an MCF 200-i and an MCF 200-(i+1). A connector 150-i drops an optical signal addressed to a subject node among the optical signals added in the transceiving node 110 from the MCF 200-i. Moreover, the connector 150-i adds optical signals addressed to the transceiving node 110 to the cores of the MCF 200-(i+1).

In the Add/Drop node 120-1, the connector 150-1 drops an optical signal addressed to the subject node from the core 201-1 of the MCF 200-1. The connector 150-1 connects the dropped optical signal to the receiving device 122-1. Moreover, the connector 150-1 adds an optical signal generated by the transmitting device 121-1 to the core 201-2 of the MCF 200-2. The optical signal added to the core 201-2 is an optical signal transmitted from the Add/Drop node 120-1 to the transceiving node 110.

The connector 150-1 connects the cores 202-1 and 203-1 among the cores of the MCF 200-1 to the cores 202-2 and 203-2 among the cores of the MCF 200-2. The connector 150-1 relays optical signals between the MCF 200-1 and the MCF 200-2. The connector 150-1 relays optical signals transmitted through cores other than the cores 201-1 and 201-2 through which an optical signal is added or dropped.

In the Add/Drop node 120-2, the connector 150-2 drops an optical signal addressed to the subject node from the core 202-2 of the MCF 200-2. The connector 150-2 connects the dropped optical signal to the receiving device 122-2. Moreover, the connector 150-2 adds an optical signal generated by the transmitting device 121-2 to the core 202-3 of the MCF 200-3. The optical signal added to the core 202-3 is an optical signal transmitted from the Add/Drop node 120-2 to the transceiving node 110.

The connector 150-2 connects the cores 201-2 and 203-2 among the cores of the MCF 200-2 to the cores 201-3 and 203-3 among the cores of the MCF 200-3. The connector 150-2 relays optical signals between the MCF 200-2 and the MCF 200-3. The connector 150-2 relays optical signals transmitted through cores other than the cores 201-2 and 201-3 through which optical signals are added or dropped.

In the Add/Drop node 120-3, the connector 150-3 drops an optical signal addressed to the subject node from the core 203-3 of the MCF 200-3. The connector 150-3 connects the dropped optical signal to the receiving device 122-3. Moreover, the connector 150-3 adds an optical signal generated by the transmitting device 121-3 to the core 203-4 of the MCF 200-4. The optical signal added to the core 203-4 is an optical signal transmitted from the Add/Drop node 120-3 to the transceiving node 110.

The connector 150-3 connects the cores 201-3 and 202-3 among the cores of the MCF 200-3 to the cores 201-4 and 202-4 among the cores of the MCF 200-4. The connector 150-3 relays optical signals between the MCF 200-3 and the MCF 200-4. The connector 150-3 relays optical signals transmitted through cores other than the cores 203-3 and 203-4 through which optical signals are added or dropped.

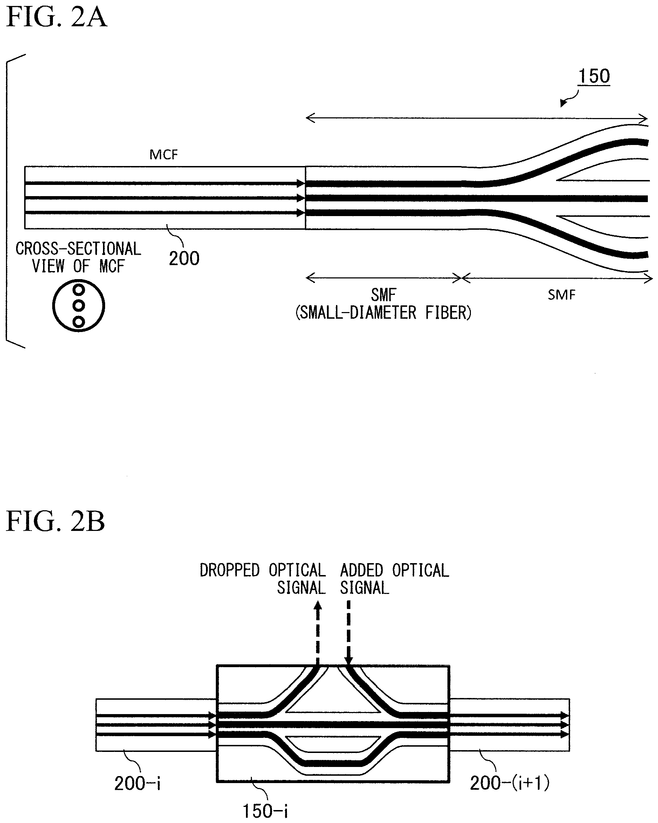

Figs. 2A and 2B are diagrams showing a first configuration example of the connector 150 used in the communication system 100. The connector 150 includes a fan-in/fan-out portion including a plurality of small-diameter single-mode fibers (SMFs) and a plurality of SMFs. As shown in Fig. 2A, the connector 150 includes a small-diameter SMF for each of the cores of a connection target MCF 200. One set of ends of the plurality of small-diameter SMFs are provided at positions facing the cores of the MCF 200. Moreover, the other set of ends of the plurality of small-diameter SMFs are provided at positions facing one set of ends of the SMFs. Each of the small-diameter SMFs connects together the SMF and the core of the MCF 200. The connector 150 can drop optical signals transmitted through the respective cores of the MCF 200 via the small-diameter SMF and the SMF. Moreover, by inputting optical signals to the SMF, it is possible to input optical signals to the cores of the MCF 200.

The connector 150-i shown in Fig. 2B connects together the MCF 200-i and the MCF 200-(i+1). The other set of ends of SMFs corresponding to cores that transmit optical signals which are an Add/Drop target are drawn out to a side surface of the connector 150-i. At the other set of ends of the SMFs drawn out to the side surface of the connector 150-i, adding and dropping (Add/Drop) of the optical signal can be performed.

The other set of ends of the SMFs corresponding to cores that transmit optical signals which are not the Add/Drop target among the cores of the MCF 200-i and the other set of ends of the SMFs corresponding to cores that transmit optical signals which are not the Add/Drop target among the cores of the MCF 200-(i+1) are provided at positions facing each other. In the connector 150-i, optical signals which are not the Add/Drop target are relayed from the MCF 200-i to the MCF 200-(i+1) via the small-diameter SMFs and the SMFs.

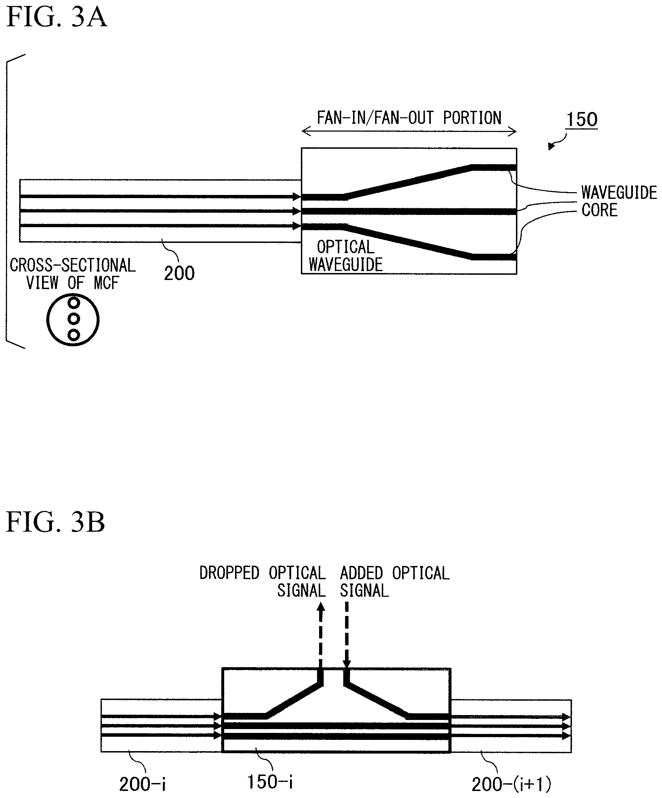

Figs. 3A and 3B are diagrams showing a second configuration example of the connector 150 used in the communication system 100. Figs. 3A and 3B show a configuration example different from the configuration example of the connector 150 shown in Figs. 2A and 2B. The connector 150 shown in Figs. 3A and 3B includes an optical waveguide including a plurality of waveguide cores formed on a glass substrate as a fan-in/fan-out portion. As shown in Fig. 3A, in the connector 150, the plurality of waveguide cores are provided at positions facing the cores of a connection target MCF 200. Optical signals transmitted through the respective cores of the MCF 200 are split via the waveguide cores. Moreover, by adding optical signals to the waveguide cores, it is possible to input optical signals to the respective cores of the MCF 200.

In the connector 150-i shown in Fig. 3B, one set of ends of waveguide cores corresponding to the cores that transmit optical signals which are the Add/Drop target among the cores of the MCF 200-i and the MCF 200-(i+1) connected together by the connector 150-i are provided at positions facing the cores of the MCFs. The other set of ends of the waveguide cores are provided on a side surface of the connector 150-i. At the other set of ends of the waveguide cores positioned on the side surface of the connector 150-i, adding and dropping of optical signals can be performed.

One set of ends of the waveguide cores corresponding to the cores that transmit optical signals which are not the Add/Drop target among the cores of the MCF 200-i are provided at positions facing the cores of the MCFs. The other set of ends of the waveguide cores are provided at positions facing the cores that transmit optical signals which are not the Add/Drop target among the cores of the MCF 200-(i+1). The cores that transmit optical signals which are not the Add/Drop target in the MCF 200-i and the MCF 200-(i+1) are connected to waveguide cores in a one-to-one relationship. In the connector 150-i, the optical signals which are not the Add/Drop target are relayed from the cores of the MCF 200-i to the cores of the MCF 200-(i+1) via the waveguide cores.

The waveguide cores may be formed in a three-dimensional space as disclosed in Reference Document 1 as well as being formed in a two-dimensional space of a substrate plane.

### [Reference Document 1]

R. R. Thomson, et al., "Ultrafast-laser inscription of a three dimensional fan-out device for multicore fiber coupling applications," Optics Express, OSA Publishing, 2007, Vol. 15, Issue 18, p. 11691-11697

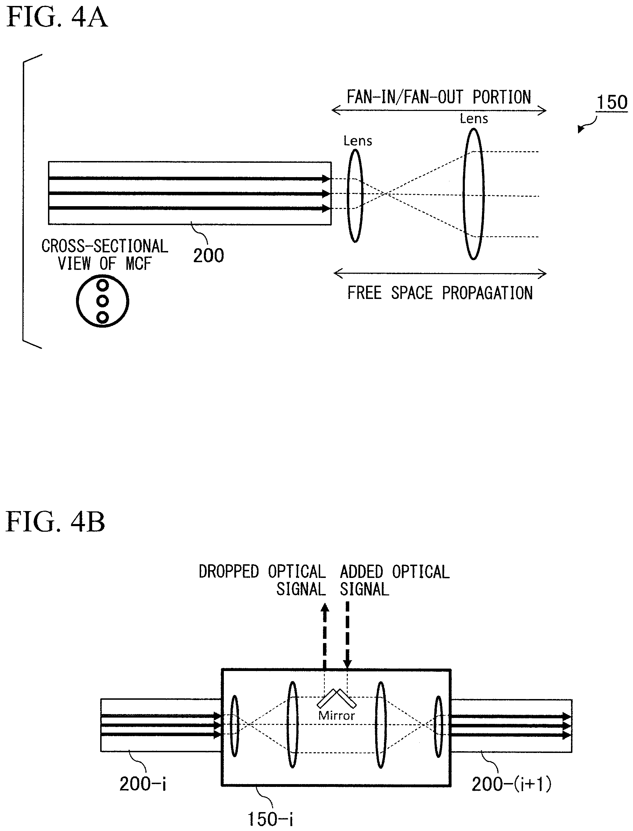

Figs. 4A and 4B are diagrams showing a third configuration example of the connector 150 used in the communication system 100. Figs. 4A and 4B show a configuration example different from the configuration example of the connector 150 shown in Figs. 2A, 2B, 3A, and 3B. The connector 150 shown in Figs. 4A and 4B causes optical signals transmitted through the respective cores of the MCF 200 to be output to a free space and causes the optical signals of the respective cores in the free space to be split by an optical system. For example, as shown in Fig. 4A, the connector 150 includes a fan-in/fan-out portion formed of two lenses. The optical signals transmitted through the respective cores of the MCF 200 are output to the free space and are split by being refracted by the two lenses. Add/Drop of optical signals is performed using an optical system. Connection of two MCFs 200 via a free space is disclosed in Reference Document 2, for example.

### [Reference Document 2]

W. Klaus, et al, "Free-Space Coupling Optics for Multicore Fibers," Photonics Technology Letters, IEEE, September 2012, Volume 24, Issue 21, p. 1902-1905

Fig. 4B is a diagram showing a configuration example of the connector 150-i. In the connector 150-i shown in Fig. 4B, the optical signals output from the respective cores of the MCF 200-i are collimated by an optical system (a collimator) formed by combining two lenses. Moreover, the collimated optical signals are input to the respective cores of the MCF 200-(i+1). A mirror that changes an optical path toward a side surface of the connector 150-i is disposed in an optical path of optical signals which are the Add/Drop target. A splitting target optical signal among the optical signals which are converted to parallel light by the optical system is reflected from a mirror and is dropped to the outside of the connector 150-i, whereby the splitting target optical signal can be obtained. Moreover, by causing optical signals input from the outside of the connector 150-i to strike the mirror, the optical signals reflected from the mirror are incident on the optical system obtained by combining two lenses together with the collimated optical signals. When the optical signals incident on the optical system are connected to the cores of the MCF 200-(i+1), Add target optical signals can be added to the cores.

Optical signals which are not the Add/Drop target are bundled together with the added optical signals after being split by the optical system and are input to the respective cores of the MCF 200-(i+1). In the connector 150-i, the optical signals which are not the Add/Drop target are relayed from the MCF 200-i to the MCF 200-(i+1) via a free space. Although two lenses are used for collimating light output from the fiber and a mirror is used for changing the propagating direction of light in the free space in the drawings, an optical device having the same function may be used.

Although Figs. 2A, 2B, 3A, 3B, 4A, and 4B show a configuration example of the connector 150, the connector 150 may be realized using a medium and a method other than those described above. For example, a planar lightwave circuit (PLC) having an optical waveguide formed on a silicon may be used as a connector.

In the communication system 100 of the first embodiment, optical signals generated by the transmitting device 111-1 of the transceiving node 110 are received by the receiving device 122-1 of the Add/Drop node 120-1 via the core 201-1 of the MCF 200-1 and the connector 150-1. The optical signals generated by the transmitting device 111-2 are received by the receiving device 122-2 of the Add/Drop node 120-2 via the core 202-1 of the MCF 200-1, the connector 150-1, the core 202-2 of the MCF 200-2, and the connector 150-2. The optical signals generated by the transmitting device 111-3 are received by the receiving device 122-3 of the Add/Drop node 120-3 via the core 203-1 of the MCF 200-1, the connector 150-1, the core 203-2 of the MCF 200-2, the connector 150-2, the core 203-3 of the MCF 200-3, and the connector 150-3.

Moreover, the optical signals generated by the transmitting device 121-1 of the Add/Drop node 120-1 are received by the receiving device 112-1 of the transceiving node 110 via the connector 150-1, the core 201-2 of the MCF 200-2, the connector 150-2, the core 201-3 of the MCF 200-3, the connector 150-3, and the core 201-4 of the MCF 200-4. The optical signals generated by the transmitting device 121-2 of the Add/Drop node 120-2 are received by the receiving device 112-2 of the transceiving node 110 via the connector 150-2, the core 202-3 of the MCF 200-3, the connector 150-3, and the core 202-4 of the MCF 200-4. The optical signals generated by the transmitting device 121-3 of the Add/Drop node 120-3 are received by the receiving device 112-3 of the transceiving node 110 via the connector 150-3 and the core 203-4 of the MCF 200-4.

In the communication system 100, the transceiving node 110 has communication paths for transmitting and receiving signals to and from the Add/Drop nodes 120-1 to 120-3. The communication system 100 has a star-type logical topology around the transceiving node 110.

For example, by connecting together the MCFs 200 at each node using any one of the connectors 150 shown in Figs. 2A, 2B, 3A, 3B, 4A, and 4B, it is possible to add and drop optical signals to and from predetermined cores among a plurality of cores included in the MCF 200. In the communication system 100, by connecting the MCF 200-i and the MCF 200-(i+1) via the connector 150-i, it is possible to easily drop optical signals addressed to the Add/Drop node 120-i and add optical signals addressed to the transceiving node 110. Since a process of dividing multiplexed optical signals having different wavelengths in respective wavelengths is not required in adding or dropping optical signals, it is possible to reduce the time and labor required for installation and maintenance of devices in the Add/Drop node 120.

Although a case in which the MCF 200 has three cores has been described, the MCF 200 may have four or more cores. When the MCF 200 has four or more cores, optical signals may be added and dropped for two or more cores of the Add/Drop node 120.

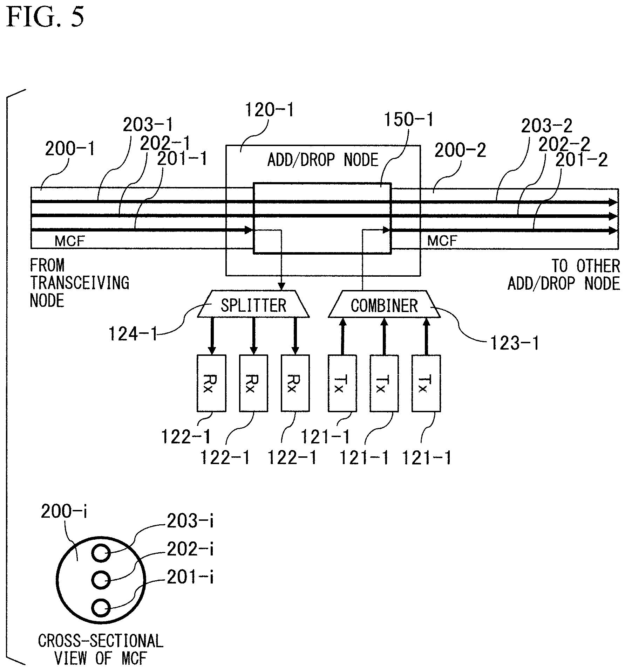

Moreover, WDM transmission may be performed in each core of the MCF 200. When WDM transmission is performed, optical signals of respective wavelengths need to be split and combined in the Add/Drop node 120. Fig. 5 is a diagram showing a configuration example of the Add/Drop node 120-1 when the communication system 100 performs WDM transmission. The Add/Drop node 120-1 includes a connector 150-1, a splitter 124-1, a combiner 123-1, a plurality of receiving devices 122-1, and a plurality of transmitting devices 121-1.

An optical signal dropped from the core 201-1 of the MCF 200-1 of the connector 150-1 is input to the splitter 124-1. The splitter 124-1 splits the input optical signal in respective wavelengths. The optical signals obtained by splitting are received by the receiving devices 122-1, respectively. The optical signals having different wavelengths generated by the plurality of transmitting devices 121-1 are input to the combiner 123-1. The combiner 123-1 combines the input optical signals and outputs the combined optical signal to the connector 150-1. The connector 150-1 connects the optical signal input from the combiner 123-1 to the core 201-2 of the MCF 200-2 to add the optical signal addressed to the transceiving node 110 to the MCF 200-2.

Even when WDM transmission is performed, the optical signals of the cores 202-1 and 203-1 of the MCF 200-1, which are not the Add/Drop target, are relayed to the cores 202-2 and 203-2 of the MCF 200-2. Due to this, as for optical signals to be relayed, it is not necessary to split and combine optical signals in respective wavelengths at each Add/Drop node. When WDM transmission is performed, the other Add/Drop nodes 120 have a configuration similar to that of the Add/Drop node 120-1.

### [Second Embodiment]

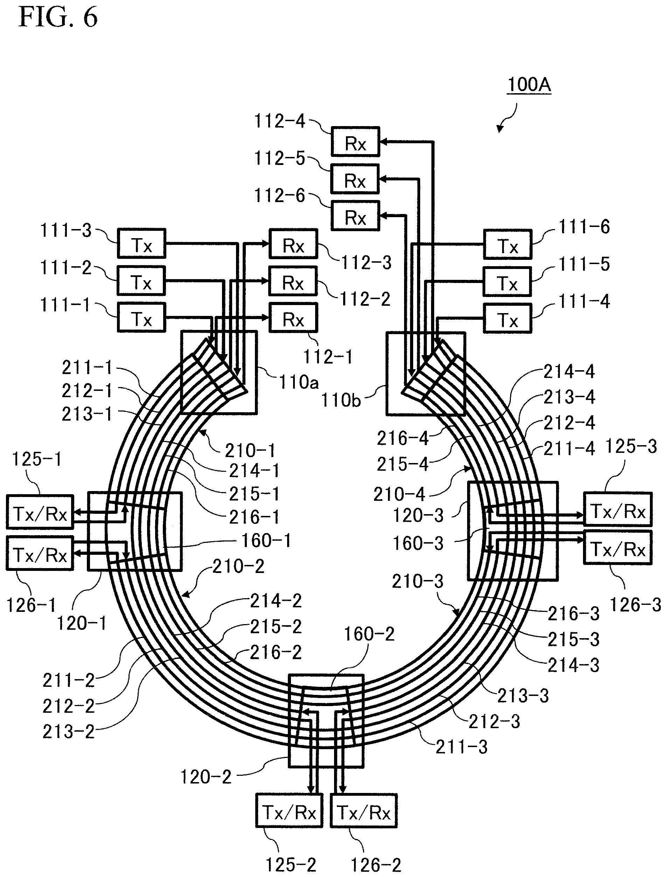

Fig. 6 is a diagram showing a configuration example of a communication system 100A according to a second embodiment. The communication system 100A includes transceiving nodes 110a and 110b and n Add/Drop nodes 120. Fig. 6 shows a configuration example of the communication system 100A when n=3. The communication system 100A is different from the communication system 100 of the first embodiment in that the communication system 100A has a physical topology of a dual-system one-way ring configuration.

Nodes are connected together by MCFs 210-1 to 210-4. The transceiving node 110a and the Add/Drop node 120-1 are connected together by the MCF 210-1. The Add/Drop node 120-1 and the Add/Drop node 120-2 are connected together by the MCF 210-2. The Add/Drop node 120-2 and the Add/Drop node 120-3 are connected together by the MCF 210-3. The Add/Drop node 120-3 and the transceiving node 110b are connected together by the MCF 210-4. The MCFs 210-1 to 210-4 of the second embodiment include six cores 211 to 216.

When the description of the configuration of the communication system 100A is generalized, an Add/Drop node 120-i (1≤i≤n-1) is connected to an Add/Drop node 120-(i+1) by an MCF 210-(i+1). The MCF 210-1 connects together the transceiving node 110a and the Add/Drop node 120-1. The MCF 210-(n+1) connects together the Add/Drop node 120-n and the transceiving node 110b.

Each node of the communication system 100A includes either a transmitting device (Tx) and a receiving device (Rx) that perform communication between nodes or a transceiving device (Tx/Rx). Transmitting devices 111-1 to 111-3 and receiving devices 112-1 to 112-3 are provided in the transceiving node 110a. Transceiving devices 125-1 and 126-1 are provided in the Add/Drop node 120-1. Transceiving devices 125-2 and 126-2 are provided in the Add/Drop node 120-2. Transceiving devices 125-3 and 126-3 are provided in the Add/Drop node 120-3. Transmitting devices 111-4 to 111-6 and receiving devices 112-4 to 112-6 are provided in the transceiving node 110b. In the configuration example of the communication system 100A shown in Fig. 6, a configuration in which the transmitting device 111 and the receiving device 112 are provided in the transceiving nodes 110a and 110b, and the transceiving devices 125 and 126 are provided in the Add/Drop nodes 120-1 to 120-3 will be described. However, the transceiving devices 125 and 126 have the functions of both a transmitting device and a receiving device therein, and there is no great difference between the transceiving device and a combination of the transmitting device and the receiving device. Either a transmitting device and a receiving device or a transceiving device may be provided in the transceiving nodes 110a and 110b and the Add/Drop nodes 120-1 to 120-3.

The transmitting devices 111-1 to 111-3 generate optical signals to be transmitted to the Add/Drop nodes 120-1 to 120-3, respectively. The optical signals generated by the transmitting devices 111-1 to 111-3 are added to the cores 211-1, 213-1, and 215-1 of the MCF 210-1, respectively. The receiving devices 112-1 to 112-3 receive optical signals transmitted from the Add/Drop nodes 120-1 to 120-3 to the transceiving node 110a, respectively. The receiving devices 112-1 to 112-3 receive optical signals from the cores 212-1, 214-1, and 216-1 of the MCF 210-1, respectively.

The transmitting devices 111-4 to 111-6 generate optical signals to be transmitted to the Add/Drop nodes 120-1 to 120-3, respectively. The optical signals generated by the transmitting devices 111-4 to 111-6 are added to the cores 211-4, 213-4, and 215-4 of the MCF 210-4, respectively. The receiving devices 112-4 to 112-6 receive optical signals transmitted from the Add/Drop nodes 120-1 to 120-3 to the transceiving node 110b, respectively. The receiving devices 112-4 to 112-6 receive optical signals from the cores 212-4, 214-4, and 216-4 of the MCF 210-4, respectively. In the transceiving nodes 110a and 110b, a fan-in device or a fan-out device is used for adding optical signals to the MCF 200 and dropping optical signals from the MCF 200.

A connector 160-i is provided in each Add/Drop node 120-i (i=1, 2, 3). The connector 160-i is connected to the MCF 210-i and the MCF 210-(i+1). The connector 160-i drops optical signals addressed to the subject node among the optical signals added in the transceiving nodes 110a and 110b from the MCF 210-i and the MCF 210-(i+1). The connector 160-i adds an optical signal addressed to the transceiving node 110a to the cores of the MCF 210-i. The connector 160-i adds an optical signal addressed to the transceiving node 110b to the cores of the MCF 210-(i+1).

In the Add/Drop node 120-1, the connector 160-1 drops an optical signal addressed to the subject node from the core 211-1 of the MCF 210-1. The connector 160-1 connects the dropped optical signal to the transceiving device 125-1. Moreover, the connector 160-1 adds an optical signal generated by the transceiving device 125-1 to the core 212-1 of the MCF 210-1. The optical signal added to the core 212-1 is an optical signal which is transmitted from the subject node to the transceiving node 110a.

Furthermore, the connector 160-1 drops an optical signal addressed to the subject node from the core 211-2 of the MCF 210-2. The connector 160-1 connects the dropped optical signal to the transceiving device 126-1. Moreover, the connector 160-1 adds an optical signal generated by the transceiving device 126-1 to the core 212-2 of the MCF 210-2. The optical signal added to the core 212-2 is an optical signal which is transmitted from the subject node to the transceiving node 110b.

The connector 160-1 connects the cores 213-1 to 216-1 among the cores of the MCF 210-1 to the cores 213-2 to 216-2 among the cores of the MCF 210-2, respectively. The connector 160-1 relays optical signals between the MCF 210-1 and the MCF 210-2. The connector 160-1 relays optical signals transmitted through cores other than the cores 211-1, 212-1, 211-2, and 212-2 through which optical signals are added or dropped.

In the Add/Drop node 120-2, the connector 160-2 drops an optical signal addressed to the subject node from the core 213-2 of the MCF 210-2. The connector 160-2 connects the dropped optical signal to the transceiving device 125-2. Moreover, the connector 160-2 adds an optical signal generated by the transceiving device 125-2 to the core 214-2 of the MCF 210-2. The optical signal added to the core 214-2 is an optical signal which is transmitted from the subject node to the transceiving node 110a.

Furthermore, the connector 160-2 drops an optical signal addressed to the subject node from the core 213-3 of the MCF 210-3. The connector 160-2 connects the dropped optical signal to the transceiving device 126-2. Moreover, the connector 160-2 adds an optical signal generated by the transceiving device 126-2 to the core 214-3 of the MCF 210-3. The optical signal added to the core 214-3 is an optical signal which is transmitted from the subject node to the transceiving node 110b.

The connector 160-2 connects the cores 211-2, 212-2, 215-2, and 216-2 among the cores of the MCF 210-2 to the cores 211-3, 212-3, 215-3, and 216-3 among the cores of the MCF 210-3, respectively. The connector 160-2 relays optical signals between the MCF 210-2 and the MCF 210-3. The connector 160-2 relays optical signals transmitted through cores other than the cores 213-2, 214-2, 213-3, and 214-3 through which optical signals are added or dropped.

In the Add/Drop node 120-3, the connector 160-3 drops an optical signal addressed to the subject node from the core 215-3 of the MCF 210-3. The connector 160-3 connects the dropped optical signal to the transceiving device 126-3. Moreover, the connector 160-3 adds an optical signal generated by the transceiving device 126-3 to the core 216-3 of the MCF 210-3. The optical signal added to the core 216-3 is an optical signal which is transmitted from the subject node to the transceiving node 110a.

Furthermore, the connector 160-3 drops an optical signal addressed to the subject node from the core 215-4 of the MCF 210-4. The connector 160-4 connects the dropped optical signal to the transceiving device 125-3. Moreover, the connector 160-3 adds an optical signal generated by the transceiving device 125-3 to the core 216-3 of the MCF 210-4. The optical signal added to the core 216-4 is an optical signal which is transmitted from the subject node to the transceiving node 110b.

The connector 160-3 connects the cores 211-3 to 214-3 among the cores of the MCF 210-3 to the cores 211-4 to 214-4 among the cores of the MCF 210-4, respectively. The connector 160-3 relays optical signals between the MCF 210-3 and the MCF 210-4. The connector 160-3 relays optical signals transmitted through cores other than the cores 215-3, 216-3, 215-4, and 216-4 through which optical signals are added or dropped.

The connectors 160-1 to 160-3 of the second embodiment can be configured similarly to the connectors 150-1 to 150-3 of the first embodiment by using the small-diameter fiber, the optical waveguide, the optical system, and the like as shown in Figs. 2A, 2B, 3A, 3B, 4A, and 4B.

In the communication system 100A of the second embodiment, a transmission communication path and a reception communication path are formed between the transceiving nodes 110a and 110b and the Add/Drop nodes 120-1 to 120-3. The transceiving nodes 110a and 110b can communicate with the Add/Drop nodes 120-1 to 120-3 individually. In this manner, the communication system 100A has a tree-type logical topology in which the transceiving nodes 110a and 110b are used as root nodes.

The Add/Drop nodes 120-1 to 120-3 may use any one of the communication paths directed to the two transceiving nodes 110a and 110b as an active system (0-system) and use the other as a standby system (1-system). Moreover, the Add/Drop nodes 120-1 to 120-3 may use a communication path of the shorter transmission distance as the 0-system and use a communication path of the longer transmission distance as the 1-system. In the Add/Drop nodes 120-1 to 120-3, since a process of dividing multiplexed optical signals having different wavelengths in respective wavelengths is not required in adding or dropping optical signals, it is possible to reduce the time and labor required for installation and maintenance of devices.

Although a case in which each MCF 210 has six cores 211 to 216 has been described, the MCF 210 may have seven or more cores. When the MCF 210 has seven or more cores, optical signals may be added and dropped for two or more cores of the Add/Drop node 120.

Moreover, WDM transmission may be performed in each core of the MCF 210. When WDM transmission is performed, as shown in Fig. 5 in the first embodiment, a splitter or a combiner for optical signals to be added or dropped is provided in each Add/Drop node 120.

Moreover, the transceiving node 110a and the transceiving node 110b may be connected together using the MCF 210 or a MCF having seven or more cores. In the communication system 100A, when the roles of the transceiving nodes 110a and 110b and the Add/Drop nodes 120-1 to 120-3 are changed, a logical topology can be easily changed by attaching a connector to the transceiving nodes 110a and 110b and replacing the connector 150 of each of the Add/Drop nodes 120-1 to 120-3 with another connector. In this way, it is possible to flexibly cope with a change in the network configuration.

### [Third embodiment]

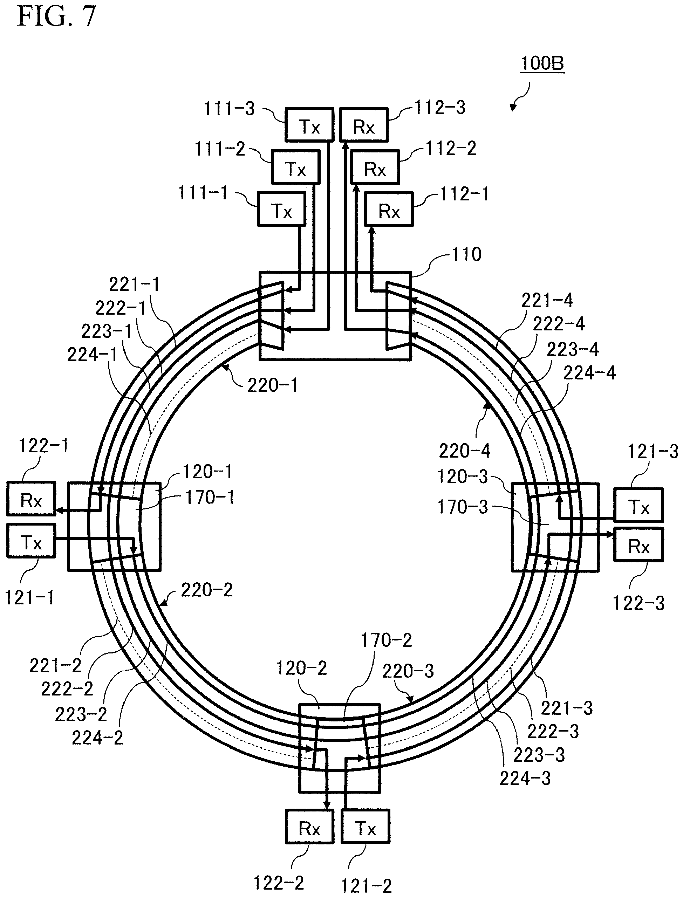

Fig. 7 is a diagram showing a configuration example of a communication system 100B according to a third embodiment. The communication system 100B includes a transceiving node 110 and n Add/Drop nodes 120. Fig. 7 shows a configuration example of the communication system 100B when n=3. Nodes are connected together by MCFs 220-1 to 220-4. The communication system 100B has a physical topology of a single-system one-way ring configuration in which nodes are connected together by MCFs 220-1 to 220-4.

The transceiving node 110 and the Add/Drop node 120-1 are connected together by the MCF 220-1. The Add/Drop node 120-1 and the Add/Drop node 120-2 are connected together by the MCF 220-2. The Add/Drop node 120-2 and the Add/Drop node 120-3 are connected by the MCF 220-3. The Add/Drop node 120-3 and the transceiving node 110 are connected together by the MCF 220-4.

The MCFs 220-1 to 220-4 each have fourth cores 221 to 224 unlike the MCFs 200-1 to 200-4 of the first embodiment. In the Add/Drop node 120 of the communication systems of the first and second embodiments, optical signals are added or dropped to or from the core at the same position in the MCF. In contrast, in the Add/Drop node 120 of the communication system 100B of the third embodiment, the position of a core in which an optical signal is dropped in the MCF is different from the position of a core in which an optical signal is added in the MCF.

Each node of the communication system 100B includes a transmitting device and a receiving device that perform communication between nodes similarly to the communication system 100 (Fig. 1) of the first embodiment. In the transceiving node 110, the transmitting devices 111-1 to 111-3 add optical signals to be transmitted to the Add/Drop nodes 120-1 to 120-3 to the cores 221-1, 222-1, and 223-1 of the MCF 220-1, respectively. The receiving devices 112-1 to 112-3 receive optical signals transmitted from the Add/Drop nodes 120-1 to 120-3, respectively. The optical signals received by the receiving devices 112-1 to 112-3 are dropped from the cores 221-4, 222-4, and 224-4 of the MCF 220-4.

A connector 170 is provided in each Add/Drop node 120. A connector 170-i of an Add/Drop node 120-i (i=1, 2, ..., n) connects together an MCF 220-i and an MCF 220-(i+1). The connector 170-i drops an optical signal addressed to the subject node among optical signals added to the core of the MCF 220-1 at the transceiving node 110 from the MCF 200-i. Moreover, the connector 170-i adds an optical signal addressed to the transceiving node 110 to the core of the MCF 200-(i+1).

In the Add/Drop node 120-1, the connector 170-1 drops an optical signal addressed to the subject node from the core 221-1 of the MCF 220-1. The connector 170-1 connects the dropped optical signal to the receiving device 122-1. Moreover, the connector 170-1 adds an optical signal generated by the transmitting device 121-1 to the core 224-2 of the MCF 220-2. The optical signal added to the core 224-2 is an optical signal transmitted from the Add/Drop node 120-1 to the transceiving node 110. The core 224-1 is not used in the MCF 220-1 that connects together the transceiving node 110 and the Add/Drop node 120-1.

The connector 170-1 connects the cores 222-1 and 223-1 among the cores of the MCF 220-1 to the cores 222-2 and 223-2 among the cores of the MCF 220-2, respectively. The connector 170-1 relays optical signals between the MCF 220-1 and the MCF 220-2. The connector 150-1 relays optical signals transmitted through cores other than the cores 221-1 and 224-2 through which optical signals are added or dropped and non-used cores 224-1 and 221-2.

In the Add/Drop node 120-2, the connector 170-2 drops an optical signal addressed to the subject node from the core 222-2 of the MCF 220-2. The connector 170-2 connects the dropped optical signal to the receiving device 122-2. Moreover, the connector 170-2 adds an optical signal generated by the transmitting device 121-2 to the core 221-3 of the MCF 220-3. The optical signal added to the core 221-3 is an optical signal transmitted from the Add/Drop node 120-2 to the transceiving node 110.

The connector 170-2 connects the cores 223-2 and 224-2 among the cores of the MCF 220-2 to the cores 223-3 and 224-3 among the cores of the MCF 220-2, respectively. The connector 170-2 relays optical signals between the MCF 220-2 and the MCF 220-3. The connector 150-2 relays optical signals transmitted through cores other than the cores 222-2 and 221-3 through which an optical signal is added or dropped and the non-used cores 221-2 and 222-3.

In the Add/Drop node 120-3, the connector 170-3 drops an optical signal addressed to the subject node from the core 223-3 of the MCF 220-3. The connector 170-3 connects the dropped optical signal to the receiving device 122-3. Moreover, the connector 170-3 adds the optical signal generated by the transmitting device 121-3 to the core 222-4 of the MCF 220-4. The optical signal added to the core 222-4 is an optical signal transmitted from the Add/Drop node 120-3 to the transceiving node 110.

The connector 170-3 connects the cores 221-3 and 224-3 among the cores of the MCF 220-3 to the cores 221-4 and 224-4 among the cores of the MCF 220-4, respectively. The connector 170-3 relays optical signals between the MCF 220-3 and the MCF 220-4. The connector 170-3 relays optical signals transmitted through cores other than the cores 223-3 and 222-4 through which optical signals are added or dropped and the non-used cores 222-3 and 223-4.

The connectors 170-1 to 170-3 of the third embodiment can be configured similarly to the connectors 150-1 to 150-3 of the first embodiment by using the small-diameter fiber, the optical waveguide, the optical system, and the like as shown in Figs. 2A, 2B, 3A, 3B, 4A, and 4B. In the communication system 100B of the third embodiment, similarly to the communication system 100 of the first embodiment, the Add/Drop nodes 120-1 to 120-3 can transmit and receive optical signals using the individual communication paths directed to the transceiving node 110. In the communication system 100B, a non-used core is present in each MCF 220. When a core adjacent to a non-used core is used as a core to be used for an optical signal of which the transmission distance between nodes is long, it is possible to suppress a decrease in communication quality resulting from crosstalk between cores.

Although a case in which the MCF 220 includes four cores has been described, the MCF 220 may include five or more cores. When the MCF 220 includes five or more cores, optical signals may be added or dropped to or from two or more cores in the Add/Drop node 120. Moreover, the number of non-used cores between nodes may be increased so that a core in which the number of adjacent non-used cores is large may be preferentially allocated to an optical signal of which the transmission distance is long.

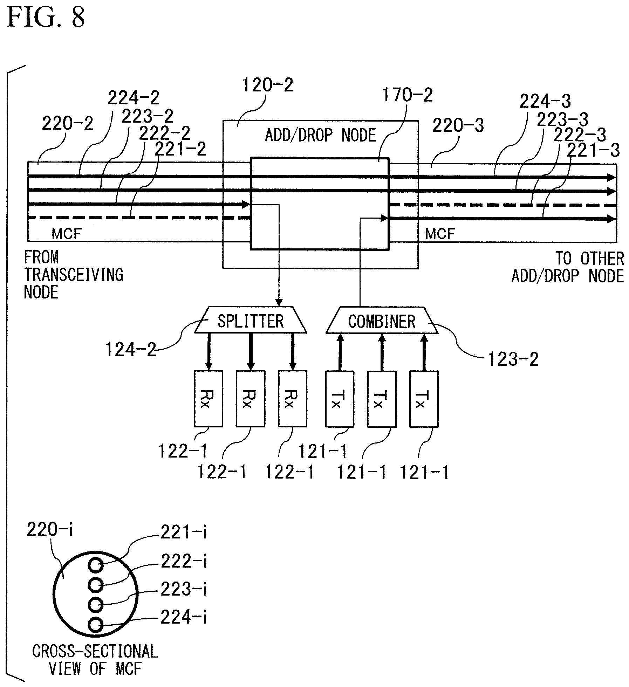

Moreover, WDM transmission may be performed in each core of the MCF 220. When WDM transmission is performed, as shown in Fig. 5 in the first embodiment, a splitter or a combiner for optical signals to be added or dropped is provided in each Add/Drop node 120. Fig. 8 is a diagram showing a configuration example of the Add/Drop node 120-2 when the communication system 100B performs WDM transmission. The Add/Drop node 120-2 includes a connector 170-2, a splitter 124-2, a combiner 123-2, a plurality of receiving devices 122-2, and a plurality of transmitting devices 121-1. An optical signal dropped from the core 222-2 of the MCF 220-2 by the connector 170-2 is input to the splitter 124-1. The splitter 124-2 splits the input optical signal in respective wavelengths, and the respective optical signals obtained by splitting are output to the receiving devices 122-2. The optical signals having different wavelengths generated by the plurality of transmitting devices 121-2 are input to the combiner 123-2. The combiner 123-2 combines the input optical signals and inputs the combined optical signal to the connector 170-2. The connector 170-1 adds the optical signal input from the combiner 123-2 to the core 221-3 of the MCF 220-3 to add the optical signal addressed to the transceiving node 110 to the MCF 220-3.

Even when WDM transmission is performed, the optical signals of the cores 223-2 and 224-2 of the MCF 220-2 that are not the Add/Drop target are relayed to the cores 223-3 and 224-3 of the MCF 220-3. The other Add/Drop nodes 120 have a configuration similar to that of the Add/Drop node 120-2.

In the third embodiment, a configuration in which the positions of Add/Drop target cores in the Add/Drop node 120 are different (also referred to as a "different core facing configuration") has been described, this configuration may be used in combination with a configuration in which the positions of Add/Drop target cores are the same (also referred to as a "same core facing configuration") as in the first embodiment. When the amount of information transmitted from the transceiving node 110 to the Add/Drop node 120 is different from the amount of information transmitted from the Add/Drop node 120 to the transceiving node 110, the number of optical signals dropped from the MCF 220 in the Add/Drop node 120 may be different from the number of optical signals added to the MCF 220.

The communication system 100A of the second embodiment having a physical topology of a dual-system one-way ring configuration may have a configuration in which the positions of Add/Drop target cores in the Add/Drop node 120 are different (a different core facing configuration) similarly to the communication system 100B of the third embodiment. When the communication system 100A has a different core facing configuration, a core in which the number of adjacent cores is small or a core in which the number of cores through which optical signals are transmitted is small among the adjacent cores may be preferentially allocated to optical signals of which the transmission distance is long.

### [Fourth embodiment]

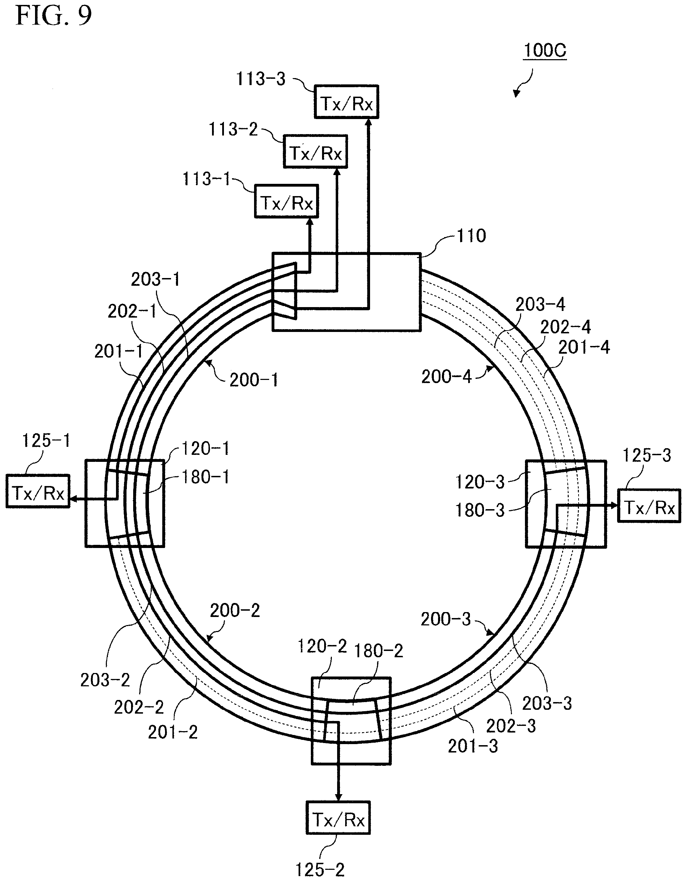

Fig. 9 is a diagram showing a configuration example of a communication system 100C according to a fourth embodiment. The communication system 100C includes a transceiving node 110 and n Add/Drop nodes 120. Fig. 9 shows a configuration example of the communication system 100C when n=3. In the communication system 100C, the connection of the MCFs 200-1 to 200-4 between nodes is the same as the connection in the first embodiment. In the communication system 100C, communication from the transceiving node 110 to each of the Add/Drop nodes 120 and communication from each of the Add/Drop nodes 120 to the transceiving node 110 are performed using the same core. When optical signals of which the transmission directions are different are transmitted using the same core, the strength of optical signals may be suppressed to a certain level or lower in order to suppress the influence of optical signals having different transmission directions and the wavelengths of optical signals may be different in each of the transmission directions. The communication system 100C is different from the communication system 100 of the first embodiment in that the communication system 100C has a physical topology of a single-system two-way ring configuration.

Each node of the communication system 100C includes a transceiving device (Tx/Rx) that performs communication between nodes. Transceiving devices 113-1 to 113-3 are provided in the transceiving node 110. Transceiving devices 125-1 to 125-3 are provided in the Add/Drop nodes 120-1 to 120-3, respectively. The transceiving devices 113-1 to 113-3 generate optical signals to be transmitted to the Add/Drop nodes 120-1 to 120-3, respectively. Moreover, the transceiving devices 113-1 to 113-3 receive optical signals transmitted from the Add/Drop nodes 120-1 to 120-3, respectively, and acquire information included in the optical signals. The transceiving devices 125-1 to 125-3 generate optical signals to be transmitted to the transceiving node 110. Moreover, the transceiving devices 125-1 to 125-3 receive optical signals transmitted from the transceiving node 110 and acquire information included in the optical signals.

The transceiving devices 113-1 to 113-3 generate optical signals to be transmitted to the Add/Drop nodes 120-1 to 120-3, respectively. Three optical signals generated by the transceiving devices 113-1 to 113-3 are added to the cores 201-1 to 203-1 of the MCF 200-1, respectively. Moreover, the transceiving devices 113-1 to 113-3 receive optical signals from the Add/Drop nodes 120-1 to 120-3 via the cores 201-1 to 203-1 of the MCF 200-1, respectively. A fan-in device or a fan-out device is used for adding optical signals to the MCF 200-1 and dropping optical signals from the MCF 200-1.

A connector 180-i is provided in each Add/Drop node 120-i (i=1, 2, 3). The connector 180-i is connected to the MCF 200-i and the MCF 200-(i+1). The connector 180-i drops an optical signal from the core 20i-i of the MCF 200-i and connects the dropped optical signal to the transceiving device 125-i. Moreover, the connector 180-i adds an optical signal generated by the transceiving device 125-i to the core 20i-i of the MCF 200-i. The optical signal generated by the transceiving device 125-i is an optical signal transmitted from the Add/Drop node 120-i to the transceiving node 110. The connector 180-i connects together the cores 20i-i and 20i-(i+1) other than the Add/Drop target cores among the cores of the MCF 200-i and the cores of the MCF 200-(i+1) to relay optical signals.

The transceiving node 110 and the Add/Drop node 120-1 perform two-way communication using a communication path formed by the core 201-1. The transceiving node 110 and the Add/Drop node 120-2 perform two-way communication using a communication path formed by the cores 202-1 and 202-2. The transceiving node 110 and the Add/Drop node 120-3 perform two-way communication using a communication path formed by the cores 203-1, 203-2, and 203-3. The core 201-2 of the MCF 200-2, the cores 201-3 and 202-3 of the MCF 200-3, and the cores 201-4 to 203-4 of the MCF 200-4 are cores which are not used in communication.

In the communication system 100C, the Add/Drop node 120-3 may perform communication with the transceiving node 110 using the core 201-4 of the MCF 200-4 to shorten a communication path. In this case, a fan-in device or a fan-out device is necessary in a connecting portion with the MCF 200-4 in the transceiving node 110.

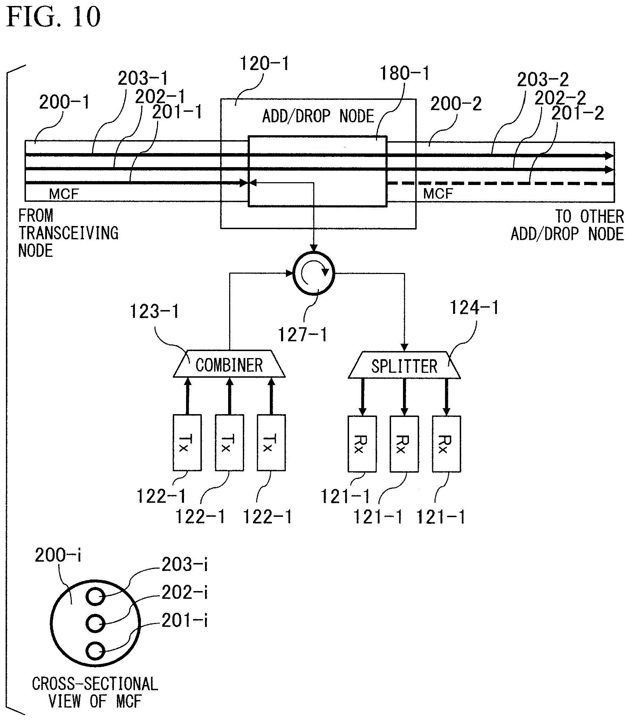

Moreover, in the communication system 100C, WDM transmission may be performed between the transceiving node 110 and each of the Add/Drop nodes 120-1 to 120-3. When WDM transmission is performed as shown in Fig. 5 in the first embodiment, it is necessary to split an optical signal dropped from the core in each of the Add/Drop nodes 120-1 to 120-3 into optical signals of respective wavelengths and combine the optical signals of the respective wavelengths into one optical signal. Fig. 10 is a diagram showing a configuration example of the Add/Drop node 120-1 when the communication system 100C performs WDM transmission. The Add/Drop node 120-1 includes a connector 180-1, an optical circulator 127-1, a splitter 124-1, a combiner 123-1, and a plurality of receiving devices 122-1 and a plurality of transmitting devices 121-1 as the transceiving device 125-1.

An optical signal dropped from the core 201-1 of the MCF 200-1 in the connector 180-1 is connected to the optical circulator 127-1. The optical signal connected from the connector 180-1 to the optical circulator 127-1 is output to the splitter 124-1. The splitter 124-1 splits the input optical signal in respective wavelengths and outputs the optical signals obtained by splitting to the receiving device 122-1. Optical signals having different wavelengths generated by the plurality of transmitting devices 121-1 are input to the combiner 123-1. The combiner 123-1 combines the input optical signals and outputs the optical signal obtained by combining to the optical circulator 127-1. The optical signal input from the combiner 123-1 to the optical circulator 127-1 is output to the connector 180-1. The connector 180-1 adds the optical signal from the optical circulator 127-1 to the core 201-1 of the MCF 200-1 whereby an optical signal addressed to the transceiving node 110 is added to the MCF 200-1.

Even when WDM transmission is performed, the optical signals of the cores 202-1 and 203-1 of the MCF 200-1, which are not the Add/Drop target, are relayed to the cores 202-2 and 203-2 of the MCF 200-2. The other Add/Drop nodes 120 have a configuration similar to that of the Add/Drop node 120-1.

Although a case in which one core is the Add/Drop target in each of the Add/Drop nodes 120 has been described in the fourth embodiment, optical signals may be dropped from a plurality of cores in each of the Add/Drop nodes 120 and optical signals may be added to a plurality of cores.

When a transceiving device in which the transmitting device 121-1 and the receiving device 122-1 are integrated is used (that is, when the transceiving device has an optical circulator therein), it is not necessary to have the optical circulator 127-1. Since it is not necessary to provide two optical components of a transmission-side combiner and a reception-side splitter, it is possible to reduce the number of optical components in each Add/Drop node 120. Examples of an optical component used for combining and splitting include an array wavelength grating (AWG; a wavelength combining and splitting element).

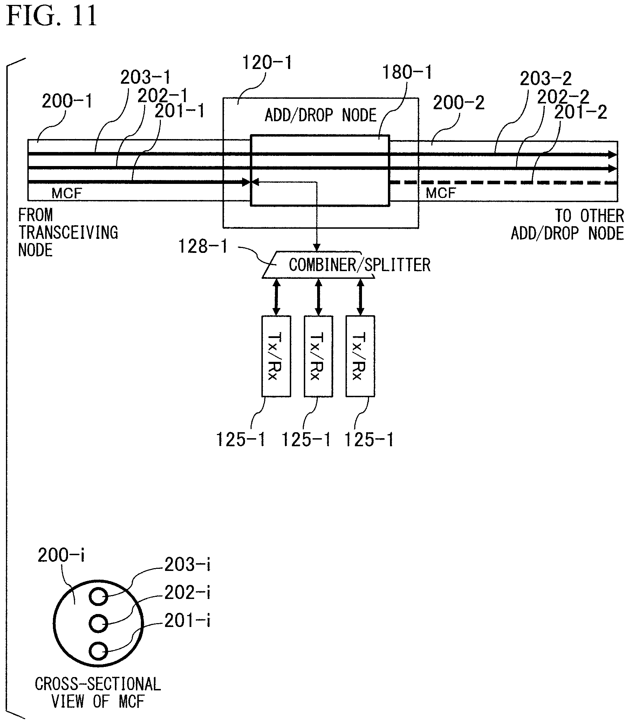

Fig. 11 is a diagram showing another configuration example of the Add/Drop node 120-1 when the communication system 100C performs WDM transmission. The Add/Drop node 120-1 includes a connector 180-1, a combiner/splitter 128-1, and a plurality of transceiving devices 125-1. The plurality of transceiving devices 125-1 are provided for respective wavelengths. The Add/Drop node 120-1 shown in Fig. 11 has a configuration in which the transmitting device 121-1 and the receiving device 122-1 in the configuration of the Add/Drop node 120-1 shown in Fig. 10 are replaced with the transceiving device 125-1. In the Add/Drop node 120-1 shown in Fig. 10, the transceiving device 125-1 may be provided instead of the transmitting device 121-1 and the receiving device 122-1. In this case, the transmitting function or the receiving function of the transceiving device 125-1 may not be used.

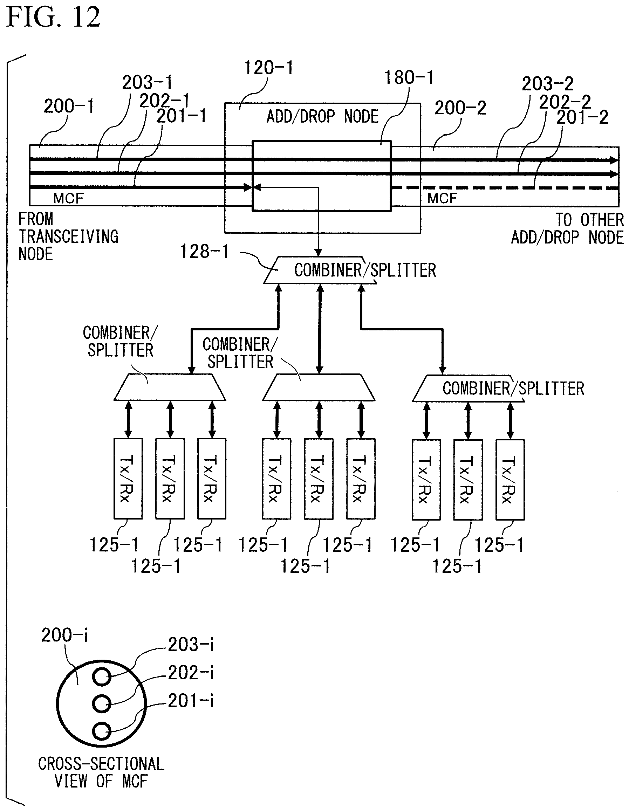

When there are many optical signals of different wavelengths to be multiplexed when WDM transmission is performed, a plurality of stages of combiners/splitters may be combined. Fig. 12 is a diagram showing a configuration example in which multiple stages of combiners/splitters are used in the Add/Drop node 120. The Add/Drop node 120-1 includes a connector 180-1, a plurality of combiners/splitters 128-1, and a plurality of transceiving devices 125-1. An optical signal dropped from the core 201-1 by the connector 180-1 is divided into three optical signals in the combiner/splitter 128-1 on the first stage. The three optical signals are split in the combiner/splitter 128-1 on the second stage. The optical signals obtained by splitting are input to the transceiving devices 125-1 of the corresponding wavelengths. Moreover, the optical signals output from the respective transceiving devices 125-1 are combined in the combiner/splitter 128-1 on the second stage and are further combined into one optical signal in the combiner/splitter 128-1 on the first stage, and the optical signal is output to the connector 180-1.

Since optical signals are added or dropped in respective cores in the Add/Drop node 120, signal deterioration such as signal constriction can be avoided as compared to when optical signals are added or dropped in respective wavelengths. Due to this, even when splitting and combining are performed in multiple stages as shown in Fig. 12, it is possible to suppress signal deterioration due to splitting and combining to be within an allowable range and to increase a transmission capacity in respective cores according to the number of optical signals to be multiplexed.

### [Fifth Embodiment]

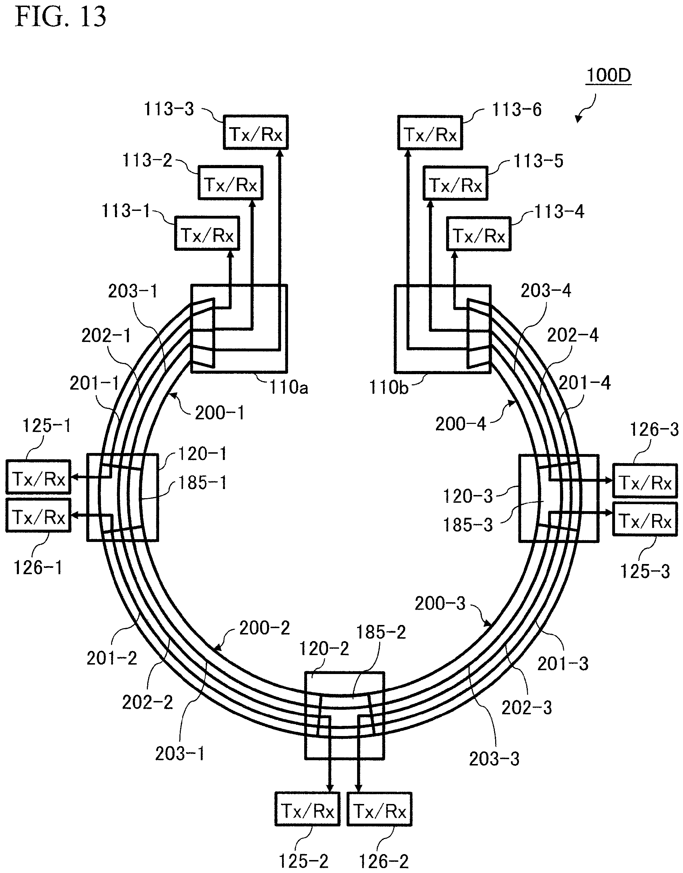

Fig. 13 is a diagram showing a configuration example of a communication system 100D according to a fifth embodiment. The communication system 100D includes transceiving nodes 110a and 110b and n Add/Drop nodes 120. Fig. 13 shows a configuration example of the communication system 100D when n=3. In the communication system 100D, the connection of MCFs 200-1 to 200-4 between nodes is similar to the connection of MCFs 210-1 to 210-4 of the second embodiment. In the communication system 100D, communication from the transceiving nodes 110a and 110b to each of the Add/Drop nodes 120 and communication from each of the Add/Drop nodes 120 to the transceiving nodes 110a and 110b are performed using the same core. The communication system 100D has a physical topology of a duel-system two-way ring configuration.

Each node of the communication system 100D includes a transceiving device (Tx/Rx) that performs communication between nodes. Transceiving devices 113-1 to 113-3 are provided in the transceiving node 110a. Transceiving devices 113-4 to 113-6 are provided in the transceiving node 110b. Transceiving devices 125-1 to 125-3 and 126-1 to 126-3 are provided in the Add/Drop nodes 120-1 to 120-3, respectively. The transceiving devices 113-1 to 113-6 generate optical signals to be transmitted to the Add/Drop nodes 120-1 to 120-3, respectively. The transceiving devices 125-1 to 125-3 generate optical signals to be transmitted to the transceiving node 110a. The transceiving devices 126-1 to 126-3 generate optical signals to be transmitted to the transceiving node 110b. Moreover, the transceiving devices 113-1 to 113-6 receive optical signals transmitted from the Add/Drop nodes 120-1 to 120-3, respectively, and acquire information included in the optical signals. The transceiving devices 125-1 to 125-3 receive optical signals transmitted from the transceiving node 110a and acquire information included in the optical signals. The transceiving devices 126-1 to 126-3 receive optical signals transmitted from the transceiving node 110b and acquire information included in the optical signals.

In the transceiving node 110a, the transceiving devices 113-1 to 113-3 generate optical signals to be transmitted to the Add/Drop nodes 120-1 to 120-3, respectively. Three optical signals generated by the transceiving devices 113-1 to 113-3 are added to the cores 201-1 to 203-1 of the MCF 200-1, respectively. Moreover, the transceiving devices 113-1 to 113-3 receive optical signals from the Add/Drop nodes 120-1 to 120-3 via the cores 201-1 to 203-1 of the MCF 200-1, respectively. A fan-in device or a fan-out device is used for adding optical signals to the MCF 200-1 and dropping optical signals from the MCF 200-1.

In the transceiving node 110b, the transceiving devices 113-4 to 113-6 generate optical signals to be transmitted to the Add/Drop nodes 120-1 to 120-3, respectively. Three optical signals generated by the transceiving devices 113-4 to 113-6 are added to the cores 201-4 to 203-4 of the MCF 200-4, respectively. Moreover, the transceiving devices 113-4 to 113-6 receive optical signals from the Add/Drop nodes 120-1 to 120-3 via the cores 201-4 to 203-4 of the MCF 200-4, respectively. A fan-in device or a fan-out device is used for adding optical signals to the MCF 200-4 and dropping optical signals from the MCF 200-4 similarly to the transceiving node 110a.

A connector 185-i is provided in each Add/Drop node 120-i (i=1, 2, 3). The connector 185-i is connected to the MCF 200-i and the MCF 200-(i+1). The connector 185-i drops an optical signal from the core 20i-i of the MCF 200-i and connects to the dropped optical signal to the transceiving device 125-i. The connector 185-i adds an optical signal generated by the transceiving device 125-i to the core 20i-i of the MCF 200-i. The optical signal generated by the transceiving device 125-i is an optical signal which is transmitted from the Add/Drop node 120-i to the transceiving node 110a.

Moreover, the connector 185-i drops an optical signal from the core 20i-(i+1) of the MCF 200-(i+1) and connects the dropped optical signal to the transceiving device 126-i. The connector 185-i adds an optical signal generated by the transceiving device 126-i to the core 20i-(i+1) of the MCF 200-(i+1). The optical signal generated by the transceiving device 126-i is an optical signal which is transmitted from the Add/Drop node 120-i to the transceiving node 110b.

Moreover, the connector 185-i connects together the core 20i-i and the core 20i-(i+1) other than the cores which are the Add/Drop target among the cores of the MCF 200-i and the cores of the MCF 200-(i+1) to relay optical signals.

The transceiving node 110a and the Add/Drop node 120-1 perform two-way communication using a communication path formed by the core 201-1. The transceiving node 110a and the Add/Drop node 120-2 perform two-way communication using a communication path formed by the cores 202-1 and 202-2. The transceiving node 110a and the Add/Drop node 120-3 perform two-way communication using a communication path formed by the cores 203-1, 203-2, and 203-3.

The transceiving node 110b and the Add/Drop node 120-1 perform two-way communication using a communication path formed by the cores 201-4, 201-3, and 201-2. The transceiving node 110b and the Add/Drop node 120-2 perform two-way communication using a communication path formed by the cores 202-4 and 202-3. The transceiving node 110b and the Add/Drop node 120-3 perform two-way communication using a communication path formed by the core 203-4.

In this manner, the communication system 100D has a tree-type logical topology in which the transceiving nodes 110a and 110b are used as root nodes and can communicate with each of the Add/Drop nodes 120-1 to 120-3. In the communication system 100D, each of the Add/Drop nodes 120-1 to 120-3 can communicate with the transceiving nodes 110a and 110b. The Add/Drop nodes 120-1 to 120-3 may use any one of the communication paths directed to the two transceiving nodes 110a and 110b as an active system (0-system) and use the other as a standby system (1-system). Moreover, the Add/Drop nodes 120-1 to 120-3 may use a communication path of the shorter transmission path as the 0-system and use a communication path of the longer transmission path as the 1-system.

In the communication system 100D, the transceiving node 110a and the transceiving node 110b may be connected together using the MCF 200 or an MCF having four or more cores. In the communication system 100D, when the roles of the transceiving nodes 110a and 110b and the Add/Drop nodes 120-1 to 120-3 are changed, a logical topology can be easily changed by attaching a connector to the transceiving nodes 110a and 110b and replacing the connector 185 of each of the Add/Drop nodes 120-1 to 120-3 with another connector. In this way, it is possible to flexibly cope with a change in the network configuration.

### [Sixth Embodiment]

In the first to fifth embodiments, a communication system which has a physical topology of a ring configuration and has a tree-type logical topology in which a transceiving node is used as a root node has been described. A communication system having another physical topology or another logical topology will be described.

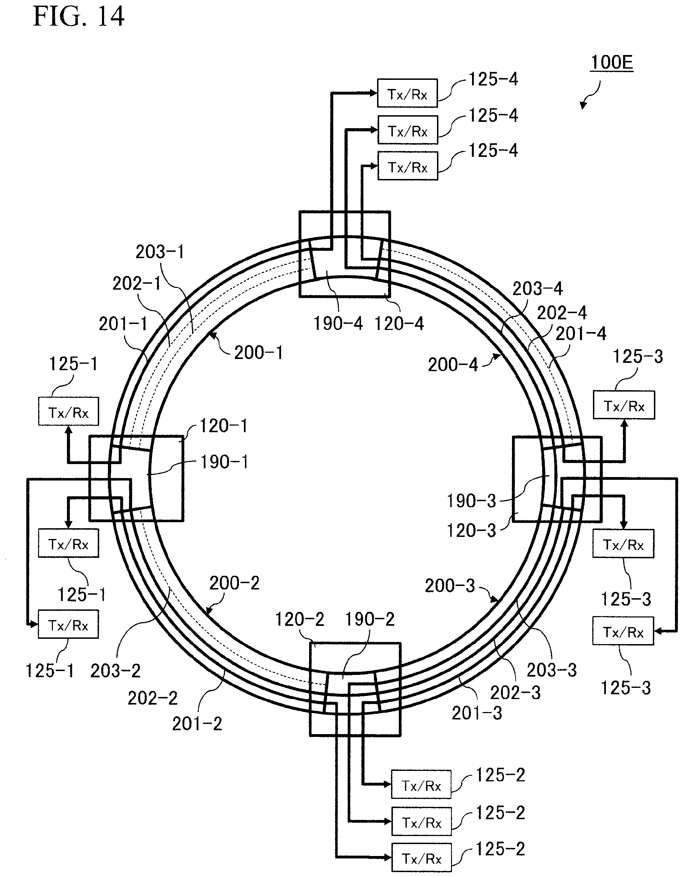

Fig. 14 is a diagram showing a configuration example of a communication system 100E according to a sixth embodiment. The communication system 100E has a physical topology of a ring configuration and has a perfect mesh-type logical topology. The communication system 100E includes n Add/Drop nodes 120. Fig. 14 shows a configuration example of the communication system 100E when n=4.

Nodes are connected together by MCFs 200-1 to 200-4. The Add/Drop node 120-1 and the Add/Drop node 120-2 are connected together by the MCF 200-2. The Add/Drop node 120-2 and the Add/Drop node 120-3 are connected together by the MCF 200-3. The Add/Drop node 120-3 and the Add/Drop node 120-4 are connected together by the MCF 200-4. The Add/Drop node 120-4 and the Add/Drop node 120-1 are connected together by the MCF 200-1. The MCFs 200-1 to 200-4 connecting the nodes each have three cores 201, 202, and 203.

Three transceiving devices (Tx/Rx) 125-i for communicating with other Add/Drop nodes 120 and a connector 190-i are provided in each Add/Drop node 120-i (i=1, 2, 3, 4). The transceiving device 125-i is provided so as to correspond to a communication counterpart Add/Drop node 120. The connector 190-1 is connected to the MCF 200-1 and the MCF 200-2. The connector 190-2 is connected to the MCF 200-2 and the MCF 200-3. The connector 190-3 is connected to the MCF 200-3 and the MCF 200-4. The connector 190-4 is connected to the MCF 200-4 and the MCF 200-1.

In the Add/Drop node 120-1, the connector 190-1 drops an optical signal from the core 201-1 of the MCF 200-1 and connects the dropped optical signal to the transceiving device 125-1 that communicates with the Add/Drop node 120-4. The connector 190-1 adds an optical signal generated by the transceiving device 125-1 that communicates with the Add/Drop node 120-4 to the core 201-1 of the MCF 200-1. Moreover, the connector 190-1 drops an optical signal from the core 202-2 of the MCF 200-2 and connects the dropped optical signal to the transceiving device 125-1 that communicates with the Add/Drop node 120-3. The connector 190-1 adds an optical signal generated by the transceiving device 125-1 that communicates with the Add/Drop node 120-3 to the core 202-2 of the MCF 200-2. Moreover, the connector 190-1 drops an optical signal from the core 201-2 of the MCF 200-2 and connects the dropped optical signal to the transceiving device 125-1 that communicates with the Add/Drop node 120-2. The connector 190-1 adds an optical signal generated by the transceiving device 125-1 that communicates with the Add/Drop node 120-2 to the core 201-2 of the MCF 200-2.

In the Add/Drop node 120-2, similarly to the connector 190-1, the connector 190-2 adds and drops optical signals to and from the core 201-2 of the MCF 200-2 and the cores 201-3 and 202-3 of the MCF 200-3. The connector 190-2 connects the dropped optical signals to the transceiving devices 125-2 that communicate with the Add/Drop nodes 120-1, 120-3, and 120-4. Moreover, the connector 190-2 adds optical signals generated by the transceiving devices 125-2 that communicate with the Add/Drop nodes 120-1, 120-3, and 120-4 to the core 201-2 of the MCF 200-2 and the cores 201-3 and 202-3 of the MCFs 200-3. The connector 190-2 relays optical signals between the core 202-2 of the MCF 200-2 and the core 202-3 of the MCF 200-3.

In the Add/Drop node 120-3, similarly to the connector 190-1, the connector 190-3 adds and drops optical signals to and from the cores 201-3 and 202-3 of the MCF 200-3 and the core 202-4 of the MCF 200-4. The connector 190-3 connects the dropped optical signals to the transceiving devices 125-3 that communicate with the Add/Drop nodes 120-1, 120-2, and 120-4. Moreover, the connector 190-3 adds optical signals generated by the transceiving devices 125-3 that communicate with the Add/Drop nodes 120-2, 120-1, and 120-4 to the cores 201-3 and 202-3 of the MCF 200-3 and the core 202-4 of the MCF 200-4. The connector 190-3 relays optical signals between the core 203-3 of the MCF 200-3 and the core 203-4 of the MCF 200-4.

In the Add/Drop node 120-4, similarly to the connector 190-1, the connector 190-4 adds and drops optical signals to and from the cores 202-4 and 203-4 of the MCF 200-4 and the core 201-1 of the MCF 200-1. The connector 190-4 connects the dropped optical signals to the transceiving devices 125-4 that communicate with the Add/Drop nodes 120-3, 120-2, and 120-1. Moreover, the connector 190-4 adds optical signals generated by the transceiving devices 125-4 that communicate with the Add/Drop nodes 120-3, 120-2, and 120-1 to the core 201-1 of the MCF 200-1 and the cores 201-4 and 202-4 of the MCF 200-4.

When the MCFs 200-1 to 200-4 are connected together as described above using the connectors 190-1 to 190-4, one-to-one communication paths are formed between the Add/Drop nodes 120-1 to 120-4. The communication system 100E has a perfect mesh-type logical topology.

In the communication system 100E, a configuration in which a communication path is formed between each of two nodes of the Add/Drop nodes 120-1 to 120-4 has been described. However, the communication system may have a partial mesh-type logical topology in which a communication path is formed between some of the Add/Drop nodes 120-1 to 120-4. Moreover, in the communication system 100E, a configuration of two-way communication in which optical signals of which the transmission directions are different are transmitted through one core has been described. However, the communication system may perform one-way communication in which an optical signal of one transmission direction is transmitted through one core as shown in Fig. 1, 6, 7, and the like. Moreover, the communication system may have a dual-system configuration in which two systems of communication paths are formed between the Add/Drop nodes 120-1 to 120-4.

### [Seventh Embodiment]

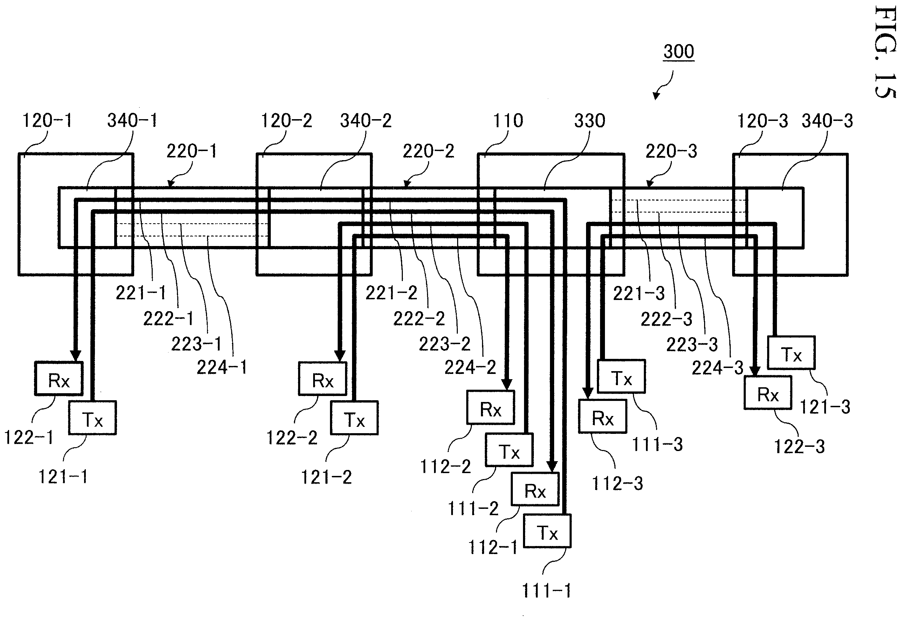

Fig. 15 is a diagram showing a configuration example of a communication system 300 according to a seventh embodiment. The communication system 300 includes a transceiving node 110 and n Add/Drop nodes 120. Fig. 15 shows a configuration example of the communication system 300 when n=3. The communication system 300 has a single-system one-way linear physical topology unlike the communication systems shown in the first to sixth embodiments. Nodes are connected together by MCFs 220-1 to 220-3. The Add/Drop node 120-1 and the Add/Drop node 120-2 are connected together by the MCF 220-1. The Add/Drop node 120-2 and the transceiving node 110 are connected together by the MCF 220-2. The transceiving node 110 and the Add/Drop node 120-3 are connected together by the MCF 220-3. The MCFs 220-1 to 220-3 each include four cores 221, 222, 223, and 224.

Each node of the communication system 300 includes a transmitting device (Tx) and a receiving device (Rx) that perform communication between nodes. Transmitting devices 111-1 to 111-3 and receiving devices 112-1 to 112-3 are provided in the transceiving node 110. A transmitting device 121-1 and a receiving device 122-1 are provided in the Add/Drop node 120-1. A transmitting device 121-2 and a receiving device 122-2 are provided in the Add/Drop node 120-2. A transmitting device 121-3 and a receiving device 122-3 are provided in the Add/Drop node 120-3.

A connector 330 is provided in the transceiving node 110. The connector 330 connects together the MCF 220-2 and the MCF 220-3. The connector 330 adds optical signals generated by the transmitting devices 111-1 to 111-3 to the cores 221-2 and 222-3 of the MCF 220-2 and the core 224-3 of the MCF 220-3, respectively. Moreover, the connector 330 connects the optical signals dropped from the cores 222-2 and 224-2 of the MCF 220-2 and the core 223-3 of the MCF 220-3 to the receiving devices 112-1 to 112-3, respectively.

Connectors 340-1 to 340-3 are provided in the Add/Drop nodes 120-1 to 120-3, respectively. Each of the connectors 340-1 to 340-3 drops an optical signal addressed to the subject node from the core of the MCF 220 and adds an optical signal addressed to the transceiving node 110 to the core of the MCF 220.

In the Add/Drop node 120-1, the connector 340-1 is connected to the MCF 220-1. The connector 340-1 drops an optical signal addressed to the subject node from the core 221-1 of the MCF 220-1 and connects the dropped optical signal to the receiving device 122-1. Moreover, the connector 340-1 adds an optical signal generated by the transmitting device 121-1 to the core 222-1 of the MCF 220-1.

In the Add/Drop node 120-2, the connector 340-2 is connected to the MCF 220-1 and the MCF 220-2. The connector 340-2 drops an optical signal addressed to the subject node from the core 223-2 of the MCF 220-2 and connects the dropped optical signal to the receiving device 122-2. Moreover, the connector 340-2 adds an optical signal generated by the transmitting device 121-2 to the core 224-2 of the MCF 220-2. The connector 340-2 connects the cores 221-1 and 222-1 of the MCF 220-1 to the cores 221-2 and 222-2 of the MCF 220-2. The connector 340-2 relays optical signals between the MCF 220-1 and the MCF 220-2.

In the Add/Drop node 120-3, the connector 340-3 is connected to the MCF 220-3. The connector 340-3 drops an optical signal addressed to the subject node from the core 224-3 of the MCF 220-3 and connects the dropped optical signal to the receiving device 122-3. Moreover, the connector 340-3 adds an optical signal generated by the transmitting device 121-3 to the core 223-3 of the MCF 220-3.

In the communication system 300 of the seventh embodiment, a transmission communication path and a reception communication path are formed between the transceiving node 110 and each of the Add/Drop nodes 120-1 to 120-3. The transceiving node 110 can communicate with the individual Add/Drop nodes 120-1 to 120-3. In this manner, the communication system 300 has a tree-type logical topology in which the transceiving node 110 is used as a root node. In Fig. 15, the cores 223-1, 224-1, 221-3, and 222-3 depicted by broken lines are cores which are not used for transmission of optical signals.

Since the multi-core fiber (MCF) is applied to the communication system having a linear physical topology, when a number of devices requiring high-speed communication such as a datacenter, for example, are connected together, it is possible to configure a system with a small number of connections as compared to a single-core fiber (SCF) and to reduce the time and labor in changing or maintaining the system. Moreover, since the cross-sectional area of a cable per core can be reduced by using MCF instead of SCF, it is possible to decrease the volume occupied by a connection cable remarkably.

In the seventh embodiment, a configuration in which the cores in each node are divided into a transmission core and a reception core has been described. However, like the communication system 100C of the fourth embodiment, a transmission core and a reception core in each node may be the same cores. Moreover, when a core which is not used for signal transmission is present among the cores of the MCF that connects together nodes, optical signals may be added or dropped to or from two or more cores of the Add/Drop nodes 120-1 to 120-3.

### [Eighth Embodiment]

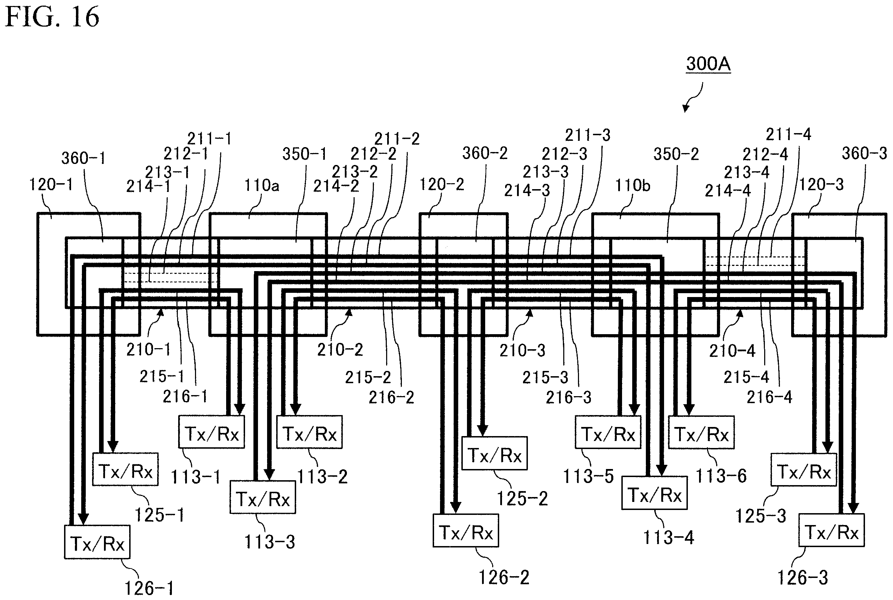

Fig. 16 is a diagram showing a configuration example of a communication system 300A according to an eighth embodiment. The communication system 300A includes transceiving nodes 110a and 110b and n Add/Drop nodes 120. Fig. 16 shows a configuration example of the communication system 300A when n=3. The communication system 300A has a physical topology of a dual-system one-way linear configuration.

Nodes are connected together by MCFs 210-1 to 210-4. The transceiving node 110a and the Add/Drop node 120-1 are connected together by the MCF 210-1. The transceiving node 110a and the Add/Drop node 120-2 are connected together by the MCF 210-2. The Add/Drop node 120-2 and the transceiving node 110b are connected together by the MCF 210-3. The transceiving node 110b and the Add/Drop node 120-3 are connected together by the MCF 210-4. The MCFs 210-1 to 210-4 that connect nodes each include six cores 211 to 216. Each node of the communication system 300A includes transceiving devices (Tx/Rx) that perform communication between nodes and a connector that connects the MCFs 210.

The Add/Drop node 120-1 includes a connector 360-1 and transceiving devices 125-1 and 126-1. The connector 360-1 is connected to the MCF 210-1. The connector 360-1 drops an optical signal from the core 216-1 of the MCF 210-1 and connects the dropped optical signal to the transceiving device 125-1. The connector 360-1 adds an optical signal generated by the transceiving device 125-1 to the core 215-1 of the MCF 210-1.

The connector 360-1 drops an optical signal from the core 212-1 of the MCF 210-1 and connects the dropped optical signal to the transceiving device 126-1. The connector 360-1 adds the optical signal generated by the transceiving device 126-1 to the core 211-1 of the MCF 210-1. The Add/Drop node 120-1 performs communication with the transceiving node 110a using the transceiving device 125-1. Moreover, the Add/Drop node 120-1 performs communication with the transceiving node 110b using the transceiving device 126-1.

The transceiving node 110a includes a connector 350-1 and transceiving devices 113-1 to 113-3. The connector 350-1 is connected to the MCF 210-1 and the MCF 210-2. The connector 350-1 drops an optical signal from the core 215-1 of the MCF 210-1 and connects the dropped optical signal to the transceiving device 113-1. The connector 350-1 adds the optical signal generated by the transceiving device 113-1 to the core 216-1 of the MCF 210-1. The connector 350-1 drops an optical signal from the core 216-2 of the MCF 210-2 and connects the dropped optical signal to the transceiving device 113-2. The connector 350-1 adds the optical signal generated by the transceiving device 113-2 to the core 215-2 of the MCF 210-2.

The connector 350-1 drops an optical signal from the core 214-2 of the MCF 210-2 and connects the dropped optical signal to the transceiving device 113-3. The connector 350-1 adds the optical signal generated by the transceiving device 113-3 to the core 213-2 of the MCF 210-2. The connector 350-1 connects the cores 211-1 and 212-1 of the MCF 210-1 to the cores 211-2 and 212-2 of the MCF 210-2, respectively. The connector 350-1 relays optical signals between the MCF 210-1 and the MCF 210-2. The transceiving node 110a performs communication with the Add/Drop nodes 120-1 to 120-3 using the transceiving devices 113-1 to 113-3, respectively.

The Add/Drop node 120-2 includes a connector 360-2 and transceiving devices 125-2 and 126-2. The connector 360-2 is connected to the MCF 210-2 and the MCF 210-3. The connector 360-2 drops an optical signal from the core 215-2 of the MCF 210-2 and connects the dropped optical signal to the transceiving device 126-2. The connector 360-2 adds the optical signal generated by the transceiving device 126-2 to the core 216-2 of the MCF 210-2.

The connector 360-2 drops an optical signal from the core 216-3 of the MCF 210-3 and connects the dropped optical signal to the transceiving device 125-2. The connector 360-2 adds the optical signal generated by the transceiving device 125-2 to the core 215-3 of the MCF 210-3. The connector 360-2 connects the cores 211-2 to 214-2 of the MCF 210-2 to the cores 211-3 to 214-3 of the MCF 210-3, respectively. The connector 360-2 relays optical signals between the MCF 210-2 and the MCF 210-3. The Add/Drop node 120-2 performs communication with the transceiving node 110a using the transceiving device 126-2. Moreover, the Add/Drop node 120-2 performs communication with the transceiving node 110b using the transceiving device 125-2.

The transceiving node 110b includes a connector 350-2 and transceiving devices 113-4 to 113-6. The connector 350-2 is connected to the MCF 210-3 and the MCF 210-4. The connector 350-2 drops an optical signal from the core 211-3 of the MCF 210-3 and connects the dropped optical signal to the transceiving device 113-4. The connector 350-2 adds the optical signal generated by the transceiving device 113-4 to the core 212-3 of the MCF 210-3. The connector 350-2 drops an optical signal from the core 215-3 of the MCF 210-3 and connects the dropped optical signal to the transceiving device 113-5. The connector 350-2 adds the optical signal generated by the transceiving device 113-5 to the core 216-3 of the MCF 210-3.

Moreover, the connector 350-2 drops an optical signal from the core 216-4 of the MCF 210-4 and connects the dropped optical signal to the transceiving device 113-6. The connector 350-2 adds the optical signal generated by the transceiving device 113-6 to the core 215-4 of the MCF 210-4. The connector 350-2 connects the cores 213-3 and 214-3 of the MCF 210-3 to the cores 213-4 and 214-4 of the MCF 210-4, respectively. The connector 350-2 relays optical signals between the MCF 210-3 and the MCF 210-4. The transceiving node 110b performs communication with the Add/Drop nodes 120-1 to 120-3 using the transceiving devices 113-4 to 113-6, respectively.

The Add/Drop node 120-3 includes a connector 360-3 and transceiving devices 125-3 and 126-3. The connector 360-3 is connected to the MCF 210-4. The connector 360-3 drops an optical signal from the core 215-4 of the MCF 210-4 and connects the dropped optical signal to the transceiving device 125-3. The connector 360-3 adds the optical signal generated by the transceiving device 125-3 to the core 216-4 of the MCF 210-4.

The connector 360-3 drops an optical signal from the core 213-4 of the MCF 210-4 and connects the dropped optical signal to the transceiving device 126-3. The connector 360-3 adds the optical signal generated by the transceiving device 126-3 to the core 214-4 of the MCF 210-4. The Add/Drop node 120-3 performs communication with the transceiving node 110b using the transceiving device 125-3. Moreover, the Add/Drop node 120-3 performs communication with the transceiving node 110a using the transceiving device 126-3.

When the MCFs 210-1 to 210-4 are connected together using the connectors 350-1, 350-2, and 360-1 to 360-3 as described above, communication paths are formed between the transceiving nodes 110a and 110b and each of the Add/Drop nodes 120-1 to 120-3. In this manner, the communication system 300A has a tree-type logical topology in which the transceiving nodes 110a and 100b are used as root nodes and can communicate with each of the Add/Drop nodes 120-1 to 120-3.

In the communication system 300A of the eighth embodiment, the Add/Drop nodes 120-1 to 120-3 each can communicate with the transceiving nodes 110a and 110b. The Add/Drop nodes 120-1 to 120-3 may use any one of the communication paths between the two transceiving nodes 110a and 110b as an active system (0-system) and use the other as a standby system (1-system). Moreover, the Add/Drop nodes 120-1 to 120-3 may use a communication path of the shorter transmission path as the 0-system and use a communication path of the longer transmission path as the 1-system.

In the eighth embodiment, a configuration in which the cores in each node are divided into a transmission core and a reception core has been described. However, like the communication system 100C of the fourth embodiment, a transmission core and a reception core in each node may be the same cores and two-way communication may be performed in one core. Moreover, when a core which is not used for signal transmission is present among the cores of the MCF that connects nodes, optical signals may be added or dropped to or from two or more cores of the Add/Drop nodes 120-1 to 120-3.

### [Ninth Embodiment]

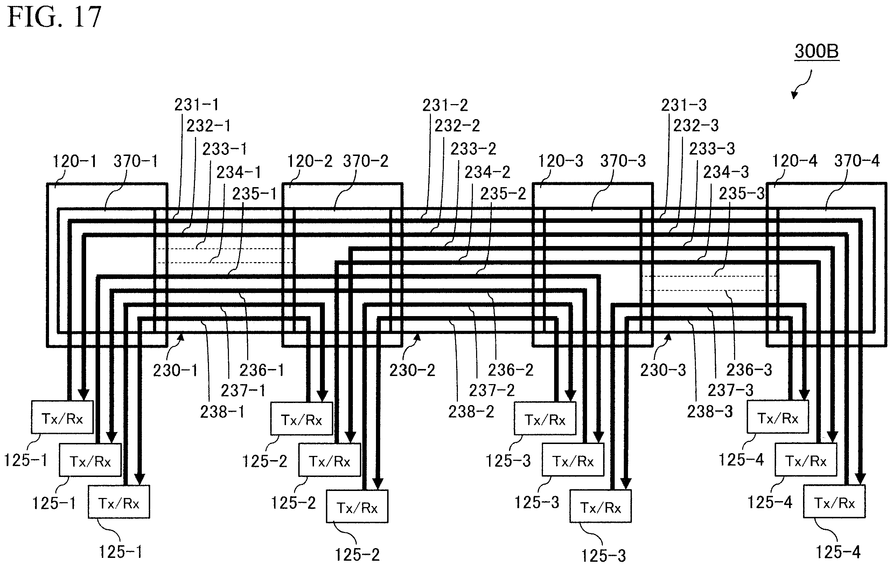

Fig. 17 is a diagram showing a configuration example of a communication system 300B according to a ninth embodiment. The communication system 300B has a linear physical topology and has a perfect mesh-type logical topology. The communication system 300B has n Add/Drop nodes 120. Fig. 17 shows a configuration of the communication system 300B when n=4.

Nodes are connected together by MCFs 230-1 to 230-3. The Add/Drop node 120-1 and the Add/Drop node 120-2 are connected together by the MCF 230-1. The Add/Drop node 120-2 and the Add/Drop node 120-3 are connected together by the MCF 230-2. The Add/Drop node 120-3 and the Add/Drop node 120-4 are connected together by the MCF 230-3. The MCFs 230 to 230-3 that connect nodes each include eight cores 231 to 238.

Three transceiving devices (Tx/Rx) 125-i for communicating with the other Add/Drop nodes 120 and a connector 370-i are provided in each Add/Drop node 120-i (i=1, 2, 3, 4). The transceiving device 125-i is provided so as to correspond to a communication counterpart Add/Drop node 120. The connector 370-1 is connected to the MCF 230-1. The connector 370-2 is connected to the MCF 230-1 and the MCF 230-2. The connector 370-3 is connected to the MCF 230-2 and the MCF 230-3. The connector 370-4 is connected to the MCF 230-3.

In the Add/Drop node 120-1, the connector 370-1 drops an optical signal from the core 232-1 of the MCF 230-1 and connects the dropped optical signal to the transceiving device 125-1 that communicates with the Add/Drop node 120-4. The connector 370-1 adds an optical signal generated by the transceiving device 125-1 that communicates with the Add/Drop node 120-4 to the core 231-1 of the MCF 230-1. Moreover, the connector 370-1 drops an optical signal from the core 236-1 of the MCF 230-1 and connects the dropped optical signal to the transceiving device 125-1 that communicates with the Add/Drop node 120-3. The connector 370-1 adds the optical signal generated by the transceiving device 125-1 that communicates with the Add/Drop node 120-3 to the core 235-1 of the MCF 230-1.

The connector 370-1 drops an optical signal from the core 238-1 of the MCF 230-1 and connects the dropped optical signal to the transceiving device 125-1 that communicates with the Add/Drop node 120-2. The connector 370-1 adds the optical signal generated by the transceiving device 125-1 that communicates with the Add/Drop node 120-2 to the core 237-1 of the MCF 230-1.

In the Add/Drop node 120-2, similarly to the connector 370-1, the connector 370-2 drops optical signals from the core 237-1 of the MCF 230-1 and the cores 233-2 and 238-2 of the MCF 230-2. The connector 370-2 connects the dropped optical signals to the transceiving devices 125-2 that communicate with the Add/Drop nodes 120-1, 120-3, and 120-4. Moreover, the connector 370-2 adds the optical signals generated by the transceiving devices 125-2 that communicate with the Add/Drop nodes 120 to the core 238-1 of the MCF 230-1 and the cores 234-2 and 237-2 of the MCF 230-2, respectively. The connector 370-2 relays optical signals between the cores 231-1 and 232-1 of the MCF 230-1 and the cores 231-2 and 232-2 of the MCF 230-2.

In the Add/Drop node 120-3, similarly to the connector 370-1, the connector 370-3 drops optical signals from the cores 237-2 and 235-2 of the MCF 230-2 and the core 238-3 of the MCF 230-3. The connector 370-2 connects the dropped optical signals to the transceiving devices 125-3 that communicate with the Add/Drop nodes 120-1, 120-2, and 120-4. Moreover, the connector 370-3 adds the optical signals generated by the transceiving devices 125-3 that communicate with the Add/Drop nodes 120 to the cores 236-2 and 238-2 of the MCF 230-2 and the core 237-3 of the MCF 230-3, respectively. The connector 370-3 relays optical signals between the cores 231-2 to 234-2 of the MCF 230-2 and the cores 231-3 to 234-3 of the MCF 230-3.

In the Add/Drop node 120-4, similarly to the connector 370-1, the connector 370-4 drops optical signals from the cores 231-1, 233-3, and 237-4 of the MCF 230-3. The connector 370-4 connects the dropped optical signals to the transceiving devices 125-4 that communicate with the Add/Drop nodes 120-1, 120-2, and 120-3. Moreover, the connector 370-4 adds the optical signals generated by the transceiving devices 125-4 that communicate with the Add/Drop nodes 120 to the cores 232-3, 234-3, and 238-3 of the MCF 230-3, respectively.

When the MCFs 230-1 to 230-3 are connected together using the connectors 370-1 to 370-4 as described above, one-to-one communication paths are formed between each of two nodes of the Add/Drop nodes 120-1 to 120-4. The communication system 300B has a perfect mesh-type logical topology. The cores 233-1 and 234-1 of the MCF 230-1 and the cores 235-3 and 236-3 of the MCF 230-3 are cores which are not used for communication.

In the ninth embodiment, a configuration in which a communication path is formed between each of two nodes of the Add/Drop nodes 120-1 to 120-4 has been described. However, the communication system may have a partial mesh-type logical topology in which a communication path is formed between some of the Add/Drop nodes 120-1 to 120-4. Moreover, in the ninth embodiment, a configuration in which the cores in each add/drop node 120 are divided into a transmission core and a reception core has been described. However, as shown in Fig. 9 and the like, the communication system may perform two-way communication in which optical signals of which the transmission directions are different are transmitted through one core. Moreover, the communication system may have a dual-system configuration in which communication paths of two systems including an active system and a standby system are formed between each of two nodes of the Add/Drop nodes 120-1 to 120-4. Furthermore, the communication system may be configured to perform two-way communication of transmitting optical signals of different transmission directions using one core and may have a dual-system configuration in which communication paths of two systems including an active system and a standby system are formed between each of two nodes of the Add/Drop nodes 120-1 to 120-4.

As described above in the embodiments, a connector connected to an MCF drops an optical signal from a core through which an optical signal addressed to a subject node is transmitted, the core being exclusively allocated for communication between nodes among a plurality of cores. The connector adds an optical signal transmitted from the subject node among the plurality of cores to a transmission destination core. In this manner, when a communication system is configured using a connector that adds or drops an optical signal in respective cores, adding and dropping of optical signals to the MCF are facilitated.

By using the connectors described in the embodiments, it becomes easy to change a logical topology without changing a physical topology. For example, in the communication system 100 shown in Fig. 1, by changing the connector 150 and the fan-in device or the fan-out device to the connector 190 shown in Fig. 14, it is possible to change the logical topology from a star-type logical topology to a mesh-type logical topology.

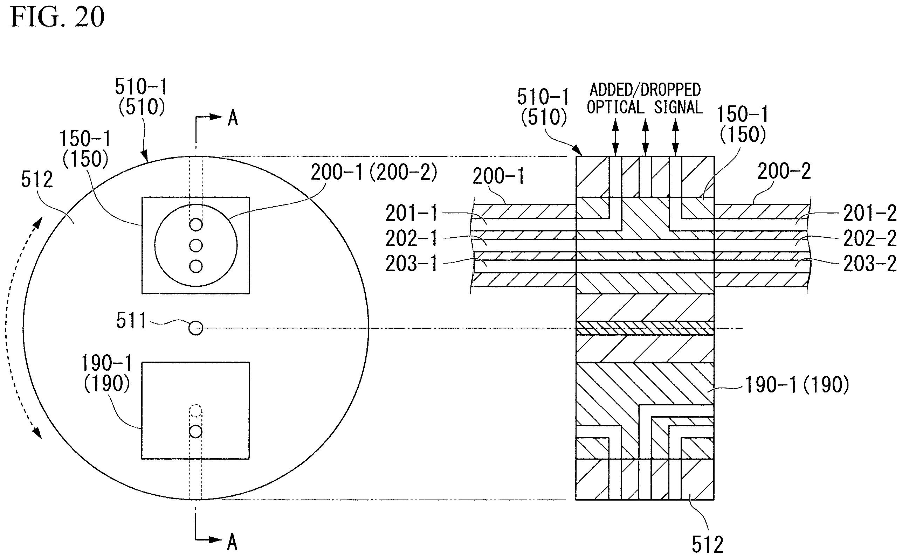

Hereinafter, a configuration example of a switching connector which enables a logical topology to be changed will be described. Fig. 20 is a diagram showing a configuration example of a switching connector 510. Fig. 20 shows a view of the switching connector 510 when seen from a direction of connecting an MCF and shows a cross-sectional view along A-A in the view. The switching connector 510 includes the connector 150 described in Fig. 1 and the connector 190 described in Fig. 14. The switching connector 510 includes a rotating portion 512 rotatable around a rotating shaft 511. The connector 150 and the connector 190 are attached to the rotating portion 512. The switching connector 510 shown in Fig. 20 is a switching connector 510-1 used in the Add/Drop node 120-1 shown in Figs. 1 and 9. The switching connector 510-1 connects together the MCF 200-1 and the MCF 200-2. In the switching connector 510-1, by rotating the rotating portion 512, it is possible to connect any one of the connector 150-1 and the connector 190-1 to each of the cores of the MCF 200-1 and the MCF 200-2.

As shown in Fig. 20, when the connector 150-1 is connected to the MCFs 200-1 and 200-2, the core 201-1 of the MCF 200-1 and the core 201-2 of the MCF 200-2 are the Add/Drop targets of optical signals. In this case, optical signals are relayed between the core 202-1 of the MCF 200-1 and the core 202-2 of the MCF 200-2. Moreover, optical signals are relayed between the core 203-1 of the MCF 200-1 and the core 203-2 of the MCF 200-2. When the connector 150-1 is selected in the switching connector 510-1, the Add/Drop node 120-1 can add and drop optical signals as the node shown in Fig. 1.

In the switching connector 510-1, when the connector 190-1 is connected to the MCFs 200-1 and 200-2, the core 201-1 of the MCF 200-1 and the cores 201-2 and 202-2 of the MCF 200-2 are the Add/Drop targets of optical signals. In this case, the cores 202-1 and 203-1 of the MCF 200-1 and the core 203-2 of the MCF 200-2 are not used for transmission of optical signals. When the connector 190-1 is selected in the switching connector 510-1, the Add/Drop node 120-1 can add and drop optical signals as the node shown in Fig. 14.

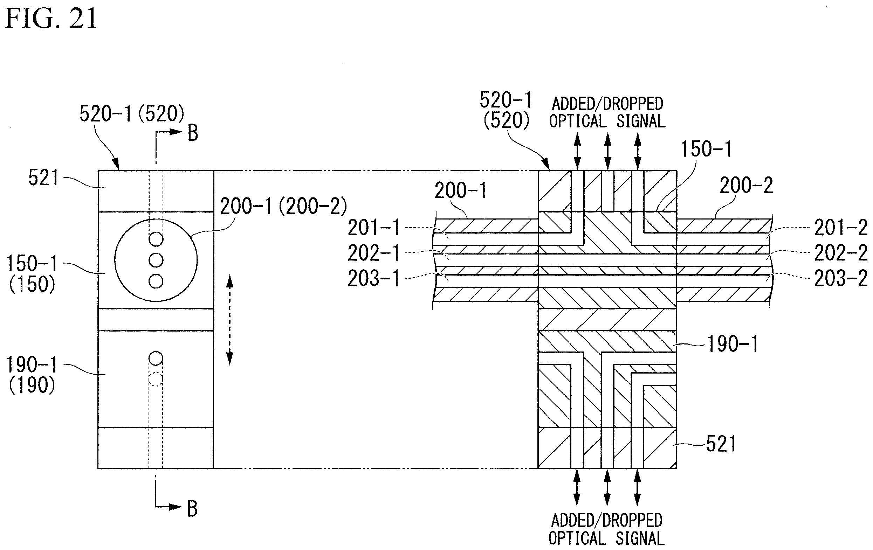

Fig. 21 is a diagram showing a configuration example of a switching connector 520. Fig. 21 shows a view of the switching connector 520 when seen from a direction of connecting an MCF and is a cross-sectional view along B-B in the view. The switching connector 520 includes the connector 150 described in Fig. 1 and the connector 190 described in Fig. 14. The switching connector 520 shown in Fig. 21 is a switching connector 510-1 used in the Add/Drop node 120-1 shown in Figs. 1 and 9. The switching connector 520-1 connects together the MCF 200-1 and the MCF 200-2. The switching connector 520-1 includes a sliding portion 521 that moves in parallel to a connection surface between the MCF 200-1 and the MCF 200-2. The connector 150 and the connector 190 are attached to the sliding portion 521. By moving the sliding portion 521 in parallel, it is possible to connect any one of the connector 150 and the connector 190 to each of the cores of the MCF 200-1 and the MCF 200-2.

As shown in Fig. 21, when the connector 150-1 is connected to the MCFs 200-1 and 200-2, the core 201-1 of the MCF 200-1 and the core 201-2 of the MCF 200-2 are the Add/Drop targets of optical signals. In this case, optical signals are relayed between the core 202-1 of the MCF 200-1 and the core 202-2 of the MCF 200-2. Moreover, optical signals are relayed between the core 203-1 of the MCF 200-1 and the core 203-2 of the MCF 200-2. When the connector 150-1 is selected in the switching connector 520-1, the Add/Drop node 120-1 can add and drop optical signals as the node shown in Fig. 1.

In the switching connector 520-1, when the connector 190-1 is connected to the MCFs 200-1 and 200-2, the core 201-1 of the MCF 200-1 and the cores 201-2 and 202-2 of the MCF 200-2 are the Add/Drop targets of optical signals. In this case, the cores 202-1 and 203-1 of the MCF 200-1 and the core 203-2 of the MCF 200-2 are not used for transmission of optical signals. When the connector 190-1 is selected in the switching connector 510-1, the Add/Drop node 120-1 can add and drop optical signals as the node shown in Fig. 14.

In Figs. 20 and 21, a configuration in which the switching connector includes the connector 150 and the connector 190 has been described. The present invention is not limited to this, and the switching connector may include three or more connectors and may enable selection of a connector that connects together two MCFs. Moreover, the MCFs connected together by the switching connector may include two or four or more cores. Moreover, a configuration example in which a connector that connects together MCFs is selected using a switching connector including a plurality of connectors has been described. The present invention is not limited to this, and a person may replace a connector provided in each node when a logical topology is changed without changing a physical topology of a communication system. When a person replaces a connector, the connector 150 that connects together the MCFs 200 is detached and the connector 190 is attached instead of the connector 150, for example.

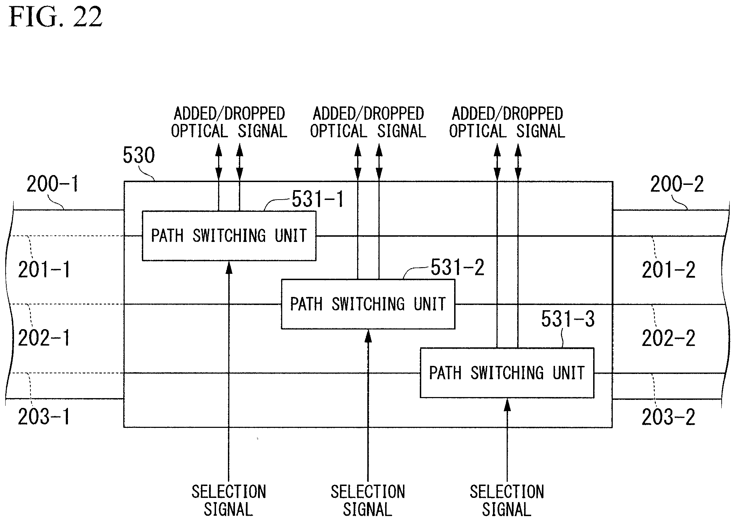

A configuration in which an internal connection of a connector can be changed dynamically instead of changing a connector that connects together two MCFs will be described. Fig. 22 is a block diagram showing a configuration example of a switching connector 530. The switching connector 530 includes a number of path switching units 531 corresponding to the number of cores of the two connected MCFs. Fig. 22 shows a configuration of the switching connector 530 when the MCF 200 includes three cores 201, 202, and 203. The path switching unit 531-1 provided in a waveguide that connects the core 201-1 of the MCF 200-1 to the core 201-2 of the MCF 200-2. The path switching unit 531-2 is provided in a waveguide that connects the core 202-1 of the MCF 200-1 to the core 202-2 of the MCF 200-2. The path switching unit 531-3 is provided in a waveguide that connects the core 203-1 of the MCF 200-1 to the core 203-2 of the MCF 200-2. Selection signals are input to the path switching units 531 from the outside. The path switching unit 531 switches, on the basis of the selection signal, between an operation to add and drop optical signals to and from the cores and an operation to relay optical signals between the cores.

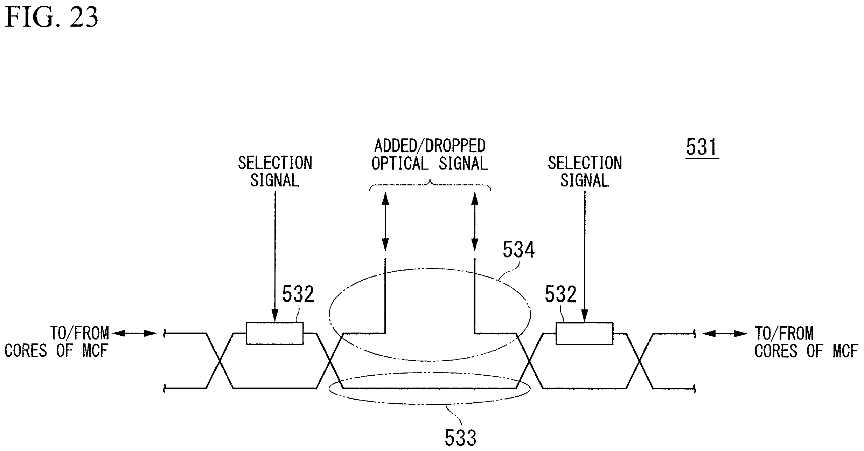

Fig. 23 is a diagram showing a configuration example of the path switching unit 531. The path switching unit 531 shown in the drawing uses a Mach-Zehnder interferometer. The path switching unit 531 includes a first optical waveguide that relays optical signals between two cores and a second optical waveguide that adds and drops optical signals to and from two cores. Furthermore, the path switching unit 531 includes two phase shifters 532 on the first optical waveguide. The phase shifter 532 changes the phase of an optical signal input from a core according to an input selection signal. An output destination of an optical signal is switched according to a change in the phase by the phase shifter 532. When an optical signal input from a core passes through a relay path 533, the optical signal is relayed between cores. When an optical signal is output to an add/drop portion 534 without passing through the relay path 533, the optical signal is added or dropped.

The switching connector 530 can select whether optical signals will be relayed between two cores or whether optical signals will be added or dropped to of two cores on the basis of a selection signal input from the outside. For example, when selection signals for selecting "add/drop," "relay," and "relay" are input to the path switching units 531-1, 531-2, and 531-3, respectively, the switching connector 530 operates as the connector 150-1 shown in Fig. 1. Moreover, when selection signals for selecting "relay," "relay," and "relay" are input to the path switching units 531-1, 531-2, and 531-3, respectively, the switching connector 530 operates as the connector 190-1 shown in Fig. 14. That is, by switching the operation of the switching connector 530 according to the selection signal, the switching connector 530 can perform an operation similar to that of the switching connector shown in Figs. 20 and 21.

Although a configuration example which is configured to use a Mach-Zehnder interferometer has been described in the switching connector 530 shown in Fig. 22, the present invention is not limited to this, and a known optical switching technology for optical waveguides may be used. An optical signal or heat as well as an electrical signal may be used as a selection signal for switching between adding/dropping of optical signals and relaying of optical signals. As described above, the switching connector 530 can form a connector that performs a desired operation by selecting any one of relaying of optical signals between cores and adding/dropping of optical signals to/from cores.

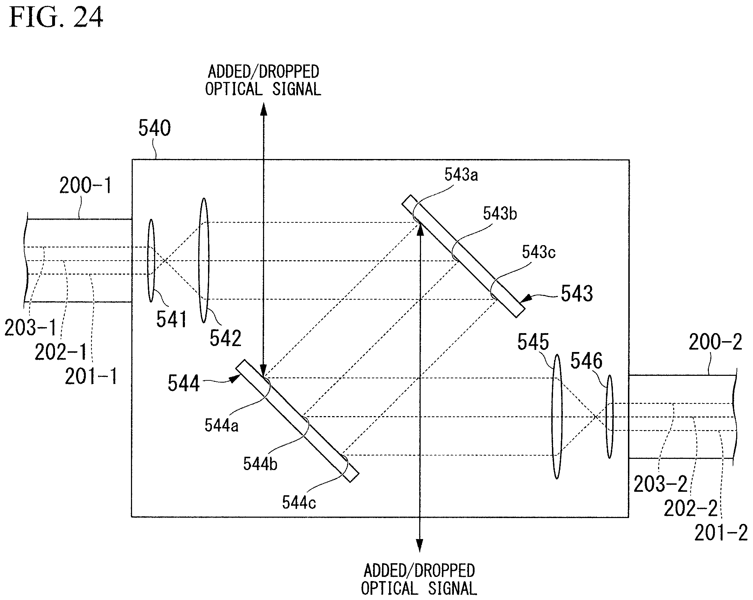

Fig. 24 is a diagram showing a configuration example of a switching connector 540 capable of dynamically changing an internal connection of a connector. The switching connector 540 causes optical signals transmitted through each core of the MCF 200 to be output to a free space and splits respective optical signals in the free space using an optical system. The switching connector 540 switches between relaying and dropping of the split optical signals. Moreover, the switching connector 540 switches whether an optical signal input from the outside will be added to a core. The switching connector 540 includes lenses 541 and 542, micro electro mechanical systems (MEMSs) 543 and 544 having mirrors of which the tilt angle can be changed, and lenses 545 and 546.

Optical signals of the cores 201-1, 202-1, and 203-1 of the MCF 200-1 are split by an optical system formed by the lenses 541 and 542 and are directed to the MEMS 543. Mirrors 543a, 543b, and 543c of which the tilt angle can be changed are attached to respective portions of the surface of the MEMS 543, on which optical signals are incident. The optical signals split by the lenses 541 and 542 are reflected by the mirrors attached to the MEMS 543 and are directed to the MEMS 544. Mirrors 544a, 544b, and 544c of which the tilt angle can be changed are attached to portions of the surface of the MEMS 544, on which optical signals are incident. The configuration of the MEMS 544 is similar to the configuration of the MEMS 543. The optical signals reflected by the MEMS 543 are reflected by the mirrors attached to the MEMS 544 and are incident on an optical system formed by the lenses 545 and 546. The optical signals collimated by the optical system are added to the cores 201-2, 202-2, and 203-2 of the MCF 200-2. Paths through which the optical signals from the cores of the MCF 200-1 are relayed to the respective cores of the MCF 200-2 are the above-described paths. When optical signals from the cores of the MCF 200-2 are relayed to the respective cores of the MCF 200-1, the paths are reverse to the above-described paths.

By changing the tilt angles of the mirrors provided on the surfaces of the MEMSs 543 and 544, it is possible to add or drop optical signals. For example, as shown in Fig. 24, by changing the tilt angle of the mirror 543a, it is possible to cause an optical signal of the core 201-1 incident on the mirror 543a via the lenses 541 and 542 to be dropped to the outside of the switching connector 540. Moreover, it is possible to cause an optical signal incident to the mirror 543a from the outside of the switching connector 540 to be added to the core 201-1. By changing the tilt angle of the mirror 544a, it is possible to cause an optical signal of the core 201-2 incident to the mirror 544a via the lenses 545 and 546 to be dropped to the outside of the switching connector 540. Moreover, it is possible to cause an optical signal incident to the mirror 544a from the outside of the switching connector 540 to be added to the core 201-2.

By changing the tilt angles of the mirrors provided on the surfaces of the MEMSs 543 and 544, it is possible to select whether an optical signal transmitted through the core of the MCF will be relayed or dropped. Moreover, by changing the tilt angle of the mirror, it is possible to select whether an optical signal input from the outside of the switching connector 540 will be added to the core of the MCF.

Although a configuration example which uses MEMS has been described in the switching connector 540 shown in Fig. 24, the present invention is not limited to this, and an existing technology capable of changing the optical path of an optical signal may be used. As described above, the switching connector 540 can select any one of relaying of optical signals between cores and adding/dropping of optical signals to/from cores and can form a connector that performs a desired operation.

When any one of the switching connectors shown in Figs. 20, 22, 23, and 24 is provided in each node of the communication system 100 shown in Fig. 1, any one of a star-type logical topology and a mesh-type logical topology can be selected as a logical topology of the communication system. The configuration of the switching connector is not limited to the shown configuration. The switching connector may have a configuration capable of selecting between relaying of optical signals between the cores of two connected MCFs and adding/dropping of optical signals to/from cores.

In the communication systems of the embodiments, a core in which the number of adjacent cores in an MCF is small may be allocated to a core used for transmitting an optical signal of which the transmission distance is long. For example, a core in which the number of adjacent cores is the smallest may be allocated for transmission of an optical signal of which the transmission distance is the longest, and cores may be allocated in descending order of the number of adjacent cores according to the length of the transmission distance. Moreover, a core exclusively allocated for a communication path between nodes may be selected on the basis of a communication quality (for example, a transmission speed, a bit error rate, an optical signal strength, or the like) required in communication between nodes. Moreover, a core exclusively allocated for a communication path between nodes may be selected on the basis of noise applied to an optical signal transmitted in a communication path between nodes.

In the communication systems of the embodiments, a configuration in which nodes are connected together by one MCF has been described. However, nodes may be connected together by a plurality of MCFs. In this case, a plurality of connectors may be provided in each node. Moreover, when a plurality of MCFs are provided between nodes, the MCFs may be divided into an MCF of an active system (0-system) and an MCF of a standby system (1-system) in a communication system having a dual-system configuration. Moreover, MCFs may be provided in respective transmission directions of an optical signal so that the MCFs are divided into a reception MCF and a transmission MCF in each Add/Drop node 120.

The arrangement of cores in an MCF shown in the description of the embodiments is an example, and an MCF having a core arrangement other than the core arrangements shown in Figs. 2 to 5, 8, 10, 11, and 12 may be used.

In the communication systems of the embodiments, although a configuration in which Add/Drop nodes are directly connected together by an MCF and an Add/Drop node and a transceiving node are directly connected together by an MCF has been described, nodes may be connected together via a plurality of MCFs and relay nodes. The relay nodes may perform amplification for compensating attenuation of optical signals in transmission between nodes, for example. Moreover, a connector having a relaying function only may be used as the relay node.

In the embodiments, although a single mode configuration in which cores in an MCF propagates only one propagation mode has been described, a multi-mode configuration in which cores in an MCF propagates a plurality of propagation modes may be used. That is, a multi-core multi-mode optical fiber may be used for connection between nodes. When a multi-core multi-mode optical fiber is used for connection between nodes, a connector provided in each node, an optical device in which an optical signal passes through a communication path, and the like need to be capable of transmit signals in multiple modes.

In the embodiments, a configuration in which an MCF is used for connection between nodes has been described. However, one or a plurality of single-core fibers (SCFs) may be used for connection between nodes. When SCFs are used for connection between nodes, a conversion connector that connects an MCF to a plurality of SCFs or a conversion connector that connects a connector to a plurality of SCFs is used.

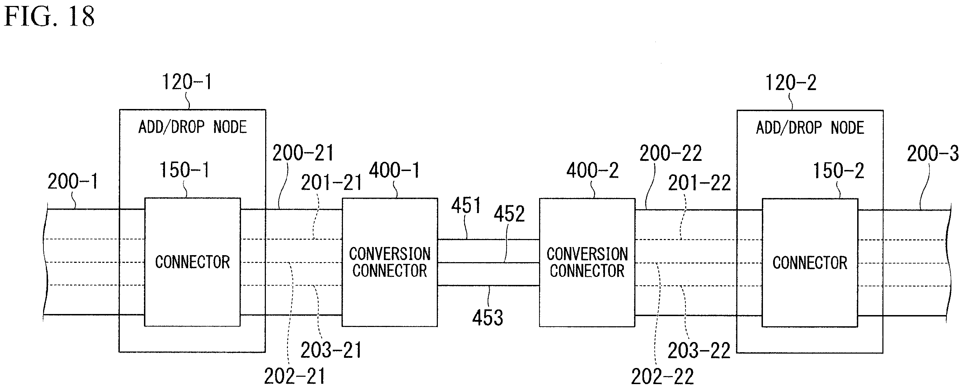

Fig. 18 is a block diagram showing a first configuration example in which a plurality of SCFs 451, 452, and 453 are used in a partial segment of the connection between the Add/Drop node 120-1 and the Add/Drop node 120-2 in the communication system 100 shown in Fig. 1. The SCFs 451, 452, and 453 are used between the MCF 200-21 connected to the connector 150-1 and the MCF 200-22 connected to the connector 150-2.

A conversion connector 400-1 is used for connection between the MCF 200-21 and the SCFs 451 to 453. The conversion connector 400-1 connects the cores 201-21, 202-21, and 203-21 of the MCF 200-21 to the SCFs 451, 452, and 453, respectively. A conversion connector 400-2 is used for connection between the MCF 200-22 and the SCFs 451 to 453. The conversion connector 400-2 connects the cores 201-22, 202-22, and 203-22 of the MCF 200-22 to the SCFs 451, 452, and 453, respectively.

The conversion connectors 400-1 and 400-2 have a configuration similar to that of a fan-in device or a fan-out device. By using the conversion connectors 400-1 and 400-2, it is possible to use the SCF in a partial segment of the connection between nodes.

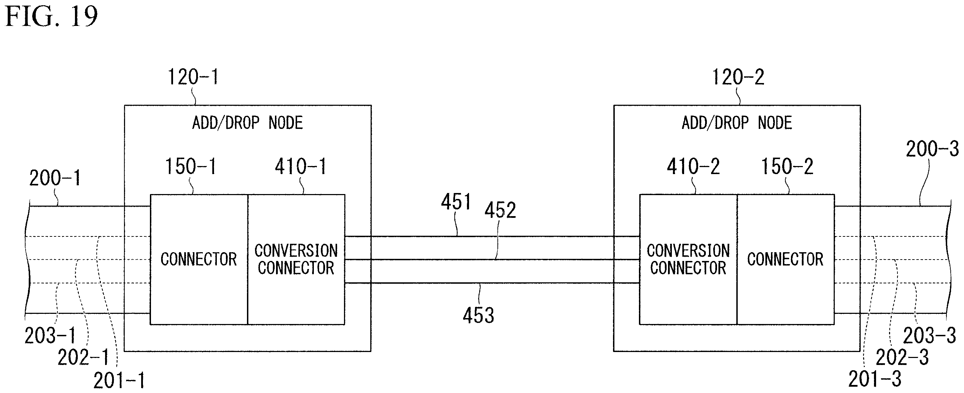

Fig. 19 is a block diagram showing a second configuration example of the communication system 100 shown in Fig. 1 in which a plurality of SCFs 451, 452, and 453 are used in the connection between the Add/Drop node 120-1 and the Add/Drop node 120-2. The SCFs 451, 452, and 453 are used for the connection between the connector 150-1 and the connector 150-2. The configuration example shown in Fig. 19 is different from the configuration example shown in Fig. 18 in that an MCF is not used for the connection between the Add/Drop nodes 120-1 and 120-2.

The Add/Drop node 120-1 further includes a conversion connector 410-1. The conversion connector 410-1 is attached to a side of the connector 150-1 close to the Add/Drop node 120-2. The Add/Drop node 120-2 further includes a conversion connector 410-2. The conversion connector 410-2 is attached to a side of the connector 150-2 close to the Add/Drop node 120-1. The SCFs 451 to 453 of the same number as the number of cores of the MCF 200 are used for the connection between the conversion connectors 410-1 and 410-2.

The conversion connector 410-1 connects the SCFs 451, 452, and 453 to the connector 150-1. The connector 150-1 performs input/output of optical signals to/from the conversion connector 410-1 instead of the MCF 200-2. The connector 150-1 connects the cores 202-1 and 203-1 of the MCF 200-1 to the SCFs 452 and 453, respectively, via the conversion connector 410-1. The conversion connector 410-1 adds an optical signal generated by the transmitting device 121-1 to the SCF 451 via the connector 150-1.

The conversion connector 410-2 connects the SCFs 451, 452, and 453 to the connector 150-2. The connector 150-2 performs input/output of optical signals to/from the conversion connector 410-2 instead of the MCF 200-2. The connector 150-2 connects the SCF 451 and 453 to the cores 201-3 and 203-3 of the MCF 200-3, respectively, via the conversion connector 410-2. The connector 150-2 connects an optical signal dropped from the SCF 453 to the receiving device 122-2 via the conversion connector 410-2.

The conversion connectors 410-1 and 410-2 has a configuration similar to that of a fan-in device or a fan-out device. By using the conversion connectors 410-1 and 410-2, it is possible to use the SCF for the connection between nodes.

Fig. 18 and 19 show configuration examples in which nodes are connected together using the SCFs instead of the MCF 200 having three cores. SCFs may be used for the connection between nodes instead of the MCF having two cores or four or more cores. In this case, similarly, a conversion connector is used.

Figs. 18 and 19 show an example in which SCFs are used for the connection between the Add/Drop nodes 120-1 and 120-2 of the communication system 100 shown in Fig. 1. The SCF may be used for the connection between other nodes. In this case, the conversion connector 400 may be used for the connection between one set of nodes and the conversion connector 410 may be used for the connection between the other set of nodes. Moreover, a combination of the conversion connector 400 that connects together an MCF and a SCF and the conversion connector 410 connected to the connector 150 may be used for the connection between one set of nodes. For example, the conversion connector 400 may be used in the Add/Drop node 120-1, and the conversion connector 410 may be used in the Add/Drop node 120-2.

MCF and SCF may be switched a plurality of times for the connection between one set of nodes. For example, MCF and SCF may be used for the connection between the Add/Drop nodes 120-1 and 120-2 in the order of MCF, SCF, MCF, SCF, and MCF. In this case, a conversion connector is used between the MCF and the SCF.

The connector 150-1 and the conversion connector 410-1 described in Fig. 19 may be configured as one connector. Similarly, the connector 150-2 and the conversion connector 410-2 may be configured as one connector. That is, a connector connected to the MCF and the plurality of SCFs may add or drop optical signals to or from the MCF or the SCF and may relay optical signals between the MCF and the SCF.

As described above, the SCF may be used in one or a plurality of connections between the nodes in the communication system 100 shown in Fig. 1 and the other communication systems.

In the embodiments, a core allocation example assuming that the amount of information transmitted from each node to another node is constant has been shown and described. However, when the amount of information transmitted to other nodes differs for each node, cores may be allocated according to the amount of information transmitted and received by each node and the number of cores used for each node to transmit signals may be changed.

While embodiments of the present invention have been described with reference to the drawings, a specific structure is not limited to the embodiments but the present invention embraces design modifications made without departing from the spirit of the present invention.

### INDUSTRIAL APPLICABILITY

The present invention is applicable to a use in which it is indispensable to facilitate adding and dropping of optical signals in nodes connected to a multi-core fiber.

### REFERENCE SIGNS LIST

100, 100A, 100B, 100C, 100D, 100E Communication system
110, 110a, 110b Transceiving node
111 Transmitting device
112 Receiving device
113 Transceiving device
120 Add/Drop node
121 Transmitting device
122 Receiving device
123 Combiner
124 Splitter
125, 126 Transceiving device
127 Optical circulator
128 Combiner/splitter
150, 160, 170, 180, 185, 190 Connector
200, 210, 220, 230 MCF (Multi Core Fiber)
201, 202, 203, 204 Core
211, 212, 213, 214, 215, 216 Core
221, 222, 223, 224 Core
231, 232, 233, 234, 235, 236, 237, 238 Core
300, 300A, 300B Communication system
330, 340, 350, 360, 370 Connector
400, 410 Conversion connector
451, 452, 453 SCF (Single Core Fiber)
510, 520, 530, 540 Switching connector
511 Rotating shaft
512 Rotating portion
521 Sliding portion
531 Path switching unit
532 Phase shifter
533 Relay path
534 Add/drop portion
541, 542, 545, 546 Lens
543, 544 MEMS
543a, 543b, 543c, 544a, 544b, 544c Mirror

## Claims

1. A communication system comprising:
three or more nodes; and
a multi-core fiber having a plurality of cores, the multi-core fiber being used in at least a partial segment of the connection between the nodes, wherein
one node of the nodes is connected to the multi-core fiber and includes a connector configured to add and drop a signal to and from an allocated core exclusively allocated from among the cores for communication between the one node and another node of the nodes and/or configured to relay a signal transmitted through another core allocated from among the cores for communication between the other nodes in the multi-core fiber connected to the one node.

2. The communication system according to claim 1, wherein
the connector is further configured to switch an operation of the allocated core to operate to add or drop a signal or to relay a signal.

3. The communication system according to claim 1, wherein
each of the nodes is connected to two other nodes.

4. The communication system according to claim 1, wherein
each of two nodes of the nodes is connected to one of the other nodes, and
each of the nodes other than the two nodes is connected to two nodes of the nodes.

5. The communication system according to claim 1, wherein
at least one node of the nodes has communication paths directed to all of the other nodes, respectively, and
each of the communication paths uses a respective allocated core.

6. The communication system according to claim 1, wherein
the nodes have communication paths directed to the other nodes, and
each of the communication paths uses a respective allocated core.

7. The communication system according to claim 6, wherein
all the nodes have communication paths directed to all of the other nodes, respectively, and
each of the communication paths uses a respective allocated core.

8. The communication system according to claim 1, wherein
the one node has one communication path directed to each communication target node of the other nodes, and
the one communication path uses a respective allocated core.

9. The communication system according to claim 1, wherein
the one node has a communication path directed to each communication target node of the other nodes, and
different cores of the cores are used for each communication path.

10. The communication system according to claim 1, wherein
the one node uses different communication paths for transmission and reception in communication with a communication target node of the other nodes, and
the allocated core allocated to the communication path for transmission is different from the allocated core allocated to the communication path for reception.

11. The communication system according to claim 1, wherein
the one node uses a communication path for transmission and reception in communication with a communication target node of the other nodes, and
the allocated core allocated to the communication path is used for transmission and reception.

12. The communication system according to claim 1, wherein
the allocated core allocated to the one node is selected from the cores on a basis of a communication quality required for the one node.

13. The communication system according to claim 1, wherein
the one node transmits a signal obtained by multiplexing signals of a plurality of wavelengths between the one node and a communication target node of the nodes via a communication path which uses the allocated core.

14. A connector used in a node connected to a multi-core fiber having a plurality of cores, wherein
the connector is configured to add or drop a signal to and from an allocated core exclusively allocated for communication of the node in which the connector is used.

15. The connector according to claim 14, wherein
the connector is further configured to relay a signal transmitted by another core allocated for communication between other nodes between multi-core fibers connected to the node.

16. The connector according to claim 15, wherein
the connector is further configured to switch an operation of the allocated core to operate to add or drop a signal or to relay a signal.
